# EUROPÄISCHE PATENTSCHRIFT

(11) **EP 4 396 049 B1**
(45) Veröffentlichungstag und Bekanntmachung des Hinweises auf die Patenterteilung: **09.07.2025**
(21) Anmeldenummer: 22765847.3
(22) Anmeldetag: 17.08.2022
(51) Int. Cl.: B60T 7/12, B60T 8/17, B60T 13/22, B60T 13/26, B60T 13/38, B60T 13/66, B60T 13/68, B60T 17/08, B60T 17/22

(54) **VERFAHREN ZUM BETREIBEN EINES ELEKTROPNEUMATISCHEN BREMSSYSTEMS, AUSFALLSICHERHEITSVENTILEINHEIT, ELEKTROPNEUMATISCHES BREMSSYSTEM, FAHRZEUG**
METHOD FOR OPERATING AN ELECTROPNEUMATIC BRAKE SYSTEM, FAIL-SAFETY VALVE UNIT, ELECTROPNEUMATIC BRAKE SYSTEM AND VEHICLE
PROCÉDÉ DE FONCTIONNEMENT D'UN SYSTÈME DE FREINAGE ÉLECTROPNEUMATIQUE, UNITÉ DE SOUPAPE À SÉCURITÉ INTÉGRÉE, SYSTÈME DE FREINAGE ÉLECTROPNEUMATIQUE ET VÉHICULE

(30) Priorität: 31.08.2021 DE 102021122497
(43) Veröffentlichungstag der Anmeldung: 10.07.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/073010
(87) Internationale Veröffentlichungsnummer: WO 2023/030897

(56) Entgegenhaltungen:
- EP-A1- 3 507 153
- EP-A1- 3 600 991
- EP-B1- 3 507 153
- EP-B1- 3 600 991
- WO-A1-2020/182575
- WO-A1-2021/104939
- DE-A1- 102017 001 409
- DE-A1- 102019 106 591
- DE-A1- 102019 131 110
- DE-A1- 102020 130 277

## Beschreibung

Die Erfindung betrifft ein Verfahren gemäß dem Oberbegriff des Anspruchs 1 zum Betreiben eines elektropneumatischen Bremssystems für ein Fahrzeug. Die Erfindung betrifft weiter eine Ausfallsicherheitsventileinheit, ein elektropneumatisches Bremssystem, das ausgebildet ist zum Durchführen eines Verfahrens der vorstehend genannten Art. Die Erfindung betrifft weiter ein Fahrzeug, das ausgebildet ist zum Durchführen eines Verfahrens der vorstehend genannten Art und/oder mit einer Ausfallsicherheitsventileinheit der vorstehend genannten Art und/oder mit einem elektropneumatischen Bremssystem der vorstehend genannten Art aufweist.

Bei elektropneumatischen Bremssystemen für moderne Fahrzeuge sind Sicherheitskonzepte von hoher Relevanz. Insbesondere bei Fahrzeugen mit automatisierten oder teilautomatisierten Fahrfunktionen tragen Konzepte zum Auslösen einer Ausfallbremsung in einem Fehlerfall oder einem Stromausfall einer Steuereinheit signifikant zur Sicherheit des Fahrzeugs, dessen Insassen und weiterer Verkehrsteilnehmer bei. Derartige Konzepte ermöglichen ein sicheres Halten des Fahrzeugs in einem Fehlerfall oder Stromausfall.

Grundsätzlich gibt es Konzepte, die eine Ausfallbremsung mittels eines Betriebsbremssystems realisieren und solche, die dies mittels eines Feststellbremssystems realisieren. Bremssysteme implementieren dabei öfter auch beide Konzepte, um zwei oder mehr Rückfallebenen zu realisieren, die dann auf den verschiedenen Konzepten beruhen. Bei auf einem Feststellbremssystem basierenden Konzepten besteht grundsätzlich der Vorteil, dass durch das Entlüften eines vorgespannten Federspeicherbremszylinders ein sicherer Halt des Fahrzeugs erreicht werden kann, ohne dass eine Druckbeaufschlagung eines Bremsaktuators mit Druckluft notwendig ist.

So beschreibt die DE 10 2019 131 930 A1 bereits ein elektropneumatisches Feststell-bremsmodul für ein elektronisch steuerbares pneumatisches Bremssystem für ein Fahrzeug mit einem Vorratsanschluss zum Empfangen eines Vor-ratsdrucks, wenigstens einem Feststellbremsanschluss zum Anschließen wenigstens eines Feststellbremszylinders, einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und einer den Vorratsdruck empfangenden Vorsteuerventilanordnung zum Bereitstellen des Steuerdrucks, wobei die Vorsteuerventilanordnung ein Bistabilventil aufweist, das zwischen einer ersten Belüftungsstellung und einer zweiten Entlüftungsstellung umschaltbar ist, und einer Steuereinheit zum Bereitstellen von ersten und zweiten Schaltsignalen an der Vorsteuerventilanordnung.

Bei dem in DE 10 2019 131 930 A1 gezeigten elektropneumatischen Feststellbrems-modul weist die Vorsteuerventilanordnung ein mit dem Bistabilventil pneumatisch in Reihe geschaltetes und in einer Steuerleitung der Hauptventileinheit angeordnetes, monostabiles Halteventil auf, wobei das Halteventil stromlos in einer Öffnungsstellung geöffnet ist, und die Steuereinheit ausgebildet ist, das Halteventil zum Halten des Steuerdrucks mittels desersten Schaltsignals in der Haltestellung zu halten, und in der Steuerleitung zwischen dem Halteventil und einem Steueranschluss der Hauptventileinheit eine Auswahlventileinheit angeordnet ist mit einem ersten Auswahlventilanschluss zum Empfangen eines an einem Zusatz-Bremsdruckanschluss bereitgestellten Zusatzsteuerdrucks, wobei die Auswahlventileinheit am ersten Auswahlventilanschluss eine Rücksperrcharakteristik aufweist derart, dass der erste Auswahlventilanschluss in einer Strömungsrichtung vom Zusatz-Bremsdruckanschluss über einen dritten Auswahlventilanschluss zum Steueranschluss öffnet und entgegen der Strömungsrichtung sperrt.

Trotz dieses bereits grundsätzlich vorteilhaften Ansatzes sind Konzepte zum Bereitstellen einer Ausfallbremsfunktion weiterhin verbesserungswürdig. Dies betrifft insbesondere das zuverlässige Bereitstellen einer Ausfallbremsfunktion unter geringem apparativen Aufwand, besonders vorteilhaft unter Nutzung bereits bestehender Strukturen des Bremssystems.

Wünschenswert ist es daher, die Funktion und/oder den Betrieb eines elektropneumatischen Bremssystems zu verbessern.

Die DE102020130277A1 offenbart eine Ausfallsicherheitsventileinheit für eine Ausfallbremsfunktion eines elektronisch steuerbaren pneumatischen Bremssystems für ein Fahrzeug, insbesondere ein Nutzfahrzeug, wobei das Bremssystem eine erste Steuereinheit und eine zweite Steuereinheit aufweist, die unabhängig voneinander mit Energie versorgt und/oder sich wenigstens teilweise gegenseitig in ihrer Funktion ersetzen können, und die Ausfallsicherheitsventileinheit ein als monostabiles Ventil ausgebildetes erstes Ausfallbremsventil und ein als monostabiles Ventil ausgebildetes zweites Ausfallbremsventil, und- eine Ventilhauptleitung aufweist, die einen, einen ersten Druck bereitstellenden, Hauptanschluss und einen Ausfallbremsanschluss pneumatisch verbindet, wobei vorgesehen ist, dass das erste Ausfallbremsventil und das zweite Ausfallbremsventil in der Ventilhauptleitung pneumatisch in Reihe geschaltet sind, und das erste Ausfallbremsventil von der ersten Steuereinheit steuerbar ist und das zweite Ausfallbremsventil von der zweiten Steuereinheit steuerbar ist, und die Ausfallbremsventile im nicht angesteuerten, insbesondere stromlosen, Zustand in einer Öffnungsstellung geöffnet sind derart, dass der am Hauptanschluss anliegende erste Druck als Ausfallbremsdruck am Ausfallbremsanschluss bereitgestellt wird derart, dass in einem Fehlerfall und/oder Stromausfall und/oder Diagnosefall der Steuereinheiten über das Bereitstellen des Ausfallbremsdrucks am Ausfallbremsanschluss durch das Bremssystem eine Ausfallbremsung des Fahrzeugs ausgelöst wird.

An dieser Stelle setzt die Erfindung an, deren Aufgabe es ist, ein verbessertes Verfahren zum Betreiben eines elektropneumatischen Bremssystems mit einer Ausfallsicherheitsventileinheit für eine Ausfallbremsfunktion anzugeben. Insbesondere soll eine Ausfallbremsfunktion zuverlässig und unter geringem apparativen Aufwand bereitgestellt werden können.

Die Erfindung geht aus von einem Verfahren zum Betreiben eines elektropneumatischen Bremssystems für ein Fahrzeug, vorzugsweise ein Nutzfahrzeug, wobei das Bremssystem ein Betriebsbremssystem und ein Feststellbremssystem umfasst, und das Feststellbremssystem mindestens einen Federspeicherbremszylinder umfasst.

Erfindungsgemäß sind bei dem Verfahren die Schritte vorgesehen: Bereitstellen eines Steuersignals zum Halten eines, den mindestens einen Federspeicherbremszylinder belüftenden Federspeicher-Belüftungsdrucks durch eine Steuereinheit, Unterbrechen des Bereitstellens des Steuersignals in einem Fehlerfall und/oder einem Stromausfall und/oder einem Diagnosefall der Steuereinheit, dadurch selbsttätiges Beenden des Haltens des Federspeicher-Belüftungsdrucks zum Entlüften des mindestens einen Federspeicherbremszylinders, und dadurch Auslösen einer Federspeicher-Ausfallbremsung des Fahrzeugs durch das Feststellbremssystem, wobei das Entlüften des Federspeicher-Belüftungsdrucks durch eine Betriebsbrems-Entlüftungsfunktion des Betriebsbremssystems erfolgt.

Die Erfindung geht aus von der Überlegung, dass mittels eines Feststellbremssystems, nämlich durch das Entlüften mindestens eines Federspeicherbremszylinders, eine Federspeicher-Ausfallbremsung zuverlässig ausgelöst und insbesondere selbsttätig gehalten werden kann, und zwar beides vorteilhaft ohne weitere Druckbeaufschlagung.

Indem durch das Unterbrechen des Bereitstellens des Steuersignals ein Halten des Federspeicher-Belüftungsdrucks selbstständig beendet wird, wird ein Entlüften des mindestens einen Federspeicherbremszylinders bewirkt. Durch das Entlüften spannt der mindestens eine Federspeicherbremszylinder zu, das heißt er wird durch eine, zuvor durch den Federspeicher-Belüftungsdruck vorgespannte, Druckfeder in einen Zustand überführt, in dem eine dem Federspeicherbremszylinder zugeordnete Radbremse zum Bremsen des Fahrzeugs betätigt wird.

Dadurch, dass das Entlüften des Federspeicher-Belüftungsdrucks bzw. des mindestens einen Federspeicherbremszylinders durch eine Betriebsbrems-Entlüftungsfunktion des Betriebsbremssystems erfolgt, kann vorteilhaft der apparative Aufwand zum Bereitstellen der Ausfallbremsfunktion in Form der Federspeicher-Ausfallbremsung gering gehalten werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Bevorzugt ist vorgesehen, dass das Auslösen der Federspeicher-Ausfallbremsung innerhalb eines Reaktionszeitraums nach dem Unterbrechen des Bereitstellens des Steuersignals erfolgt. Bevorzugt ist der Reaktionszeitraum 30 Sekunden oder weniger, besonders bevorzugt 5 Sekunden oder weniger. Ein derartiges Auslösen der Federspeicher-Ausfallbremsung innerhalb des Reaktionszeitraums ist insbesondere im Unterschied zu etwaigen Systemen zu sehen, bei denen ein Entlüften eines Feststellbremszylinders über einen relativ langen Zeitraum erfolgt und zur Sicherung eines bereits stehenden Fahrzeugs, beispielsweise zur Kompensation von Leckagen im Betriebsbremssystem, erfolgt.

Bevorzugt werden mindestens zwei Federspeicherbremszylinder einer Achse, besonders bevorzugt einer Hinterachse, zum Auslösen einer Federspeicher-Ausfallbremsung durch die Betriebsbrems-Entlüftungsfunktion entlüftet. Bevorzugt ist das Verfahren für ein elektropneumatisches Bremssystem mit einer Ausfallsicherheitsventileinheit für eine Ausfallbremsfunktion des elektropneumatischen Bremssystems ausgebildet.

Im Rahmen einer bevorzugten Weiterbildung ist vorgesehen, dass der Federspeicher-Belüftungsdruck beim Entlüften durch die Betriebsbrems-Entlüftungsfunktion zusätzlich als Betriebsbrems-Ausfallbremsdruck zum Auslösen einer Betriebsbrems-Ausfallbremsung wirksam ist. In einer derartigen Weiterbildung kann vorteilhaft der Federspeicher-Belüftungsdruck zum Entlüften des mindestens einen Federspeicherbremszylinders genutzt werden, um eine weitere Ausfallbremsfunktion in Form einer Betriebsbrems-Ausfallbremsung auszulösen.

Vorteilhaft ist in einer Weiterbildung vorgesehen, dass der Betriebsbrems-Ausfallbremsdruck über den Ausfallbremsanschluss an mindestens einen Betriebsbremszylinder und/oder eine Betriebsbremskammer und/oder einen Achsmodulator und/oder eine weitere pneumatische Bremskomponente bereitgestellt wird. Bei einem Achsmodulator wird der Betriebsbrems-Ausfallbremsdruck bevorzugt an einem Vorsteuerkreis eingesteuert zum Aktuieren eines pneumatischen Hauptventils.

Bevorzugt ist vorgesehen, dass nach dem Bereitstellen des Betriebsbrems-Ausfallbremsdrucks ein Einsperren des Betriebsbrems-Ausfallbremsdrucks, bevorzugt in dem mindestens einen Betriebsbremszylinder und/oder der Betriebsbremskammer und/oder dem Achsmodulator und/oder der weiteren pneumatischen Bremskomponente, erfolgt. Durch ein Einsperren des Betriebsbrems-Ausfallbremsdrucks kann die Betriebsbrems-Ausfallbremsung langfristig gehalten werden, auch wenn der Federspeicher-Belüftungsdruck unter einen Ausfallbremsdruck-Schwellwert gesunken ist, insbesondere wenn der mindestens eine Federspeicherbremszylinder entleert ist. Bei einem Achsmodulator wird der Betriebsbrems-Ausfallbremsdruck bevorzugt in einem Vorsteuerkreis eingesperrt.

Die Betriebsbrems-Entlüftungsfunktion ermöglicht mindestens einen, insbesondere kontinuierlich oder zeitlich unterbrochen geöffneten, Entlüftungspfad im Betriebsbremssystem zum Entlüften des mindestens einen Federspeicherbremszylinders. Die Betriebsbrems-Entlüftungsfunktion wird insbesondere durch ein Ventil im Betriebsbremssystem, bevorzugt ein Auslassventil und/oder ein weiteres Auslassventil, realisiert. In bevorzugten Weiterbildungen führt alternativ oder zusätzlich zu dem Entlüftungspfad ein weiterer Entlüftungspfad über mindestens ein ABS-Ventil und/oder über eine Drossel, besonders bevorzugt über eine Drossel, die eine Steuerleitung eines Achsmodulators mit einer Arbeitsleitung des Achsmodulators pneumatisch verbindet.

Die Erfindung wird dadurch weitergebildet, dass die Betriebsbrems-Entlüftungsfunktion das Öffnen eines Auslassventils des Betriebsbremssystems umfasst.

Bevorzugt ist das Auslassventil in einem einen Betriebsvorsteuerdruck führenden Vorsteuerkreis des Betriebsbremssystems angeordnet, besonders bevorzugt ist das Auslassventil ein Vorsteuer-Entlüftungsventil eines Achsmodulators. Ein derartiges im Vorsteuerkreis des Betriebsbremssystems angeordnetes Auslassventil ist bevorzugt ein bereits vorhandenes Ventil, das besonders bevorzugt einem anderen Primärzweck dient. Ein Beispiel hierfür ist das Vorsteuer-Entlüftungsventil, das dem Entlüften des Steueranschlusses eines pneumatischen Ventils, insbesondere Relaisventils, des Achsmodulators dient. Besonders bevorzugt ist vorgesehen, dass der Betriebsbrems-Ausfallbremsdruck als Betriebsvorsteuerdruck wirksam ist. Dies umfasst insbesondere, dass der Federspeicher-Belüftungsdruck, die bei dem Entlüften des mindestens einen Federspeicherbremszylinders am Ausfallbremsanschluss bereitgestellt wird, zum Beaufschlagen des Vorsteuerkreises des Betriebsbremssystems genutzt wird. In anderen Weiterbildungen kann das Auslassventil in einem weiteren Betriebsvorsteuerdruck führenden Vorsteuerkreis des Betriebsbremssystems angeordnet sein, beispielsweise in einem Vorsteuerkreis eines als pneumatisches Ventil ausgebildeten ABS-Ventils.

Die Erfindung wird dadurch weitergebildet, dass die Betriebsbrems-Entlüftungsfunktion das Öffnen eines weiteren Auslassventils umfasst. Bevorzugt ist das weitere Auslassventil in einem einen Betriebsbremsdruck führenden Hauptkreis des Betriebsbremssystems angeordnet. Besonders bevorzugt ist das weitere Auslassventil ein Hauptventil eines Achsmodulators oder ein ABS-Ventil. Ein Hauptventil des Achsmodulators ist bevorzugt ein luftmengenverstärkendes pneumatisches Ventil, besonders bevorzugt ein Relaisventil. Ein derartiges weiteres Auslassventil, das in einem Betriebsbremsdruck führenden Hauptkreis angeordnet ist, hat den Vorteil einer relativ großen Nennweite, was zu einer relativ schnellen Entlüftung des mindestens einen Federspeicherbremszylinders führt. Auf diese Weise kann ein vorteilhaft kurzer Reaktionszeitraum bis zum Auslösen der Federspeicher-Ausfallbremsung erreicht werden. Besonders bevorzugt ist vorgesehen, dass der Betriebsbrems-Ausfallbremsdruck als Betriebsbremsdruck wirksam ist. Dies umfasst insbesondere, dass der Federspeicher-Belüftungsdruck, die bei dem Entlüften des mindestens einen Federspeicherbremszylinders am Ausfallbremsanschluss bereitgestellt wird, zum Beaufschlagen des Hauptkreises des Betriebsbremssystems genutzt wird.

Im Rahmen einer Weiterbildung ist vorgesehen, dass das Öffnen des weiteren Auslassventils kontinuierlich oder gepulst erfolgt. Ein gepulstes Öffnen kann besonders vorteilhaft erfolgen, wenn das weitere Auslassventil ein ABS-Ventil ist. Ein ABS-Ventil ist in der Regel ausgebildet, relativ große Nennweiten innerhalb kurzer Zeiträume zu schalten, insbesondere zu entlüften. Bevorzugt ist das ABS-Ventil als direkt schaltendes Magnetventil ausgebildet. Gleichwohl kann in Weiterbildungen das ABS-Ventil als pneumatisch geschaltetes Ventil, insbesondere als Relaisventil, ausgebildet sein. Vorteilhaft kann das Öffnen des als ABS-Ventil ausgebildeten, weiteren Auslassventils in einer für ein ABS-Ventil bekannten Weise zum Verhindern eines Blockierens einer Achse erfolgen.

In bevorzugten Weiterbildungen hat das weitere Auslassventil eine Nennweite in einem Bereich von 5 mm bis 15 mm, bevorzugt in einem Bereich von 8 mm bis 12 mm, besonders bevorzugt von 10 mm. In Weiterbildungen ist das weitere Auslassventil ein zusätzliches Ventil, insbesondere Magnetventil, das bevorzugt nur der Umsetzung der Betriebsbrems-Entlüftungsfunktion dient. Generell gilt, dass je größer die Nennweite ist, desto schneller erfolgt die Entlüftung des mindestens einen Federspeicherbremszylinders.

Vorteilhaft ist das Auslassventil und/oder das weitere Auslassventil ständig in einer entlüftenden, bevorzugt geöffneten, Stellung geschaltet, oder ist beim Auslösen der Federspeicher-Ausfallbremsung in die entlüftende Stellung schaltbar.

Bevorzugt ist das Auslassventil oder das weitere Auslassventil ein bereits vorhandenes Ventil des Betriebsbremssystems mit vorzugsweise einer anderen Primärfunktion. Das Auslassventil oder das weitere Auslassventil ist vorteilhaft ausgebildet, den Federspeicher-Belüftungsdruck zum Entlüften des mindestens einen Federspeicherbremszylinders in die Umgebung zu leiten. Dies kann unmittelbar erfolgen, beispielsweise durch ein Entlüftungsventil, oder mittelbar, beispielsweise unter vorheriger Nutzung des Federspeicher-Belüftungsdrucks für einen weiteren Zweck. Ein solcher, weiterer Zweck kann beispielsweise das Erzeugen einer weiteren Bremswirkung, insbesondere im Betriebsbremssystem, umfassen. Gleichwohl kann in Weiterbildungen auch ein Auslassventil oder das weitere Auslassventil primär und/oder ausschließlich für den Zweck der Entlüftung des mindestens einen Federspeicherbremszylinders vorgesehen sein.

In einer bevorzugten Weiterbildung des Verfahrens ist vorgesehen, dass bei dem Entlüften des Federspeicher-Belüftungsdrucks eine das Feststellbremssystem versorgende Druckversorgung unterbrochen wird, bevorzugt durch ein Abschalten eines Verdichters und/oder durch ein Absperren einer Zufuhrleitung. Mittels einer Unterbrechung der das Feststellbremssystem versorgenden Druckversorgung soll erreicht werden, dass das Entlüften des mindestens einen Federspeicherbremszylinders zum Auslösen der Federspeicher-Ausfallbremsung möglichst effektiv erfolgt, insbesondere möglichst schnell und derart, dass der Federspeicherbremszylinder nach dem Entlüften im entlüfteten Zustand verbleibt. Mit anderen Worten soll verhindert werden, dass dem entlüftenden oder entlüfteten Federspeicherbremszylinder neue Druckluft nachgeführt wird.

Bevorzugt kann ein Abschalten des Verdichters auch mittelbar durch ein Absperren der Zufuhrleitung und dadurch ein druckgesteuertes Abschalten des Verdichters erfolgen. Das Unterbrechen der das Feststellbremssystem versorgenden Druckversorgung kann gleichzeitig oder innerhalb eines Toleranz-Zeitintervalls vor und/oder nach dem Entlüften des Federspeicher-Belüftungsdrucks erfolgen.

In bevorzugten Weiterbildungen des Verfahrens kann das Unterbrechen der Druckversorgung ein Absenken des Vorratsdrucks, bevorzugt durch ein Entleeren des Druckvorrats, umfassen. Besonders bevorzugt wird zum Absenken des Vorratsdrucks, bevorzugt zum Entleeren des Druckvorrats, das Auslassventil und/oder das weitere Auslassventil geöffnet.

Im Rahmen einer Weiterbildung des Verfahrens ist vorgesehen, dass das weitere Auslassventil in einem anderen Bremskreis des Betriebsbremssystems angeordnet ist als ein die Betriebsbrems-Ausfallbremsung auslösende und/oder die Federspeicher-Ausfallbremsung haltende Bremskreis des Betriebsbremssystems. Gleichwohl kann in Weiterbildungen auch vorgesehen sein, dass das weitere Auslassventil in dem die Betriebsbrems-Ausfallbremsung auslösenden Bremskreis angeordnet ist, wodurch insbesondere beim Absenken des Vorratsdrucks zusätzlich eine Bremswirkung durch das Betriebsbremssystem erzielt wird.

In einem zweiten Aspekt gibt die Erfindung zur Lösung der Aufgabe weiterhin eine Ausfallsicherheitsventileinheit für eine Ausfallbremsfunktion eines elektropneumatischen Bremssystems für ein Fahrzeug, vorzugsweise ein Nutzfahrzeug, an, wobei das elektropneumatische Bremssystem ein Betriebsbremssystem und ein Feststellbremssystem mit mindestens einem Federspeicherbremszylinder umfasst, und wobei die Ausfallsicherheitsventileinheit aufweist: eine Ventilhauptleitung, die einen Hauptanschluss und einen Ausfallbremsanschluss pneumatisch verbindet, und mindestens ein als monostabiles Ventil ausgebildetes Ausfallbremsventil, das in der Ventilhauptleitung angeordnet ist.

Bei der Ausfallsicherheitsventileinheit gemäß dem zweiten Aspekt der Erfindung ist vorgesehen, dass der Ausfallbremsanschluss mit einem einen Betriebsbremsdruck führenden Hauptkreis des Betriebsbremssystems verbindbar oder verbunden ist, der Hauptanschluss mit dem mindestens einen Federspeicherbremszylinder pneumatisch verbindbar oder verbunden ist, und das mindestens eine Ausfallbremsventil in einem nicht angesteuerten Zustand in einer ersten Stellung geöffnet ist derart, dass ein Entlüften eines am mindestens einen Federspeicherbremszylinder anliegenden Federspeicher-Belüftungsdrucks durch eine Betriebsbrems-Entlüftungsfunktion des Betriebsbremssystems über dem Ausfallbremsanschluss erfolgt zum Auslösen einer Federspeicher-Ausfallbremsung des Fahrzeugs durch das Feststellbremssystem.

In einer Weiterbildung der Ausfallsicherheitsventileinheit ist vorgesehen, dass der Federspeicher-Belüftungsdruck beim Entlüften durch die Betriebsbrems-Entlüftungsfunktion zusätzlich als Betriebsbrems-Ausfallbremsdruck zum Auslösen einer Betriebsbrems-Ausfallbremsung bereitgestellt wird.

Die Ausfallsicherheitsventileinheit wird dadurch weitergebildet, dass das mindestens eine Ausfallbremsventil von mindestens einer Steuereinheit ansteuerbar ist, derart dass in einem Fehlerfall und/oder Stromausfall und/oder Diagnosefall der mindestens einen Steuereinheit über das Entlüften eines am mindestens einen Federspeicherbremszylinder anliegenden Federspeicher-Belüftungsdrucks und/oder das Bereitstellen eines Betriebsbrems-Ausfallbremsdrucks am Ausfallbremsanschluss durch das Bremssystem eine Ausfallbremsung des Fahrzeugs ausgelöst wird. In bevorzugten Weiterbildungen ist ein Ausfallbremsventil einer Steuereinheit zugeordnet, das heißt ein Ausfallbremsventil ist von einer Steuereinheit ansteuerbar. In anderen Weiterbildungen können auch mehrere, insbesondere zwei, Ausfallbremsventile einer Steuereinheit zugeordnet sein.

In einer Weiterbildung der Ausfallsicherheitsventileinheit ist vorgesehen, dass die Ausfallsicherheitsventileinheit ein erstes, als monostabiles Ventil ausgebildetes Ausfallbremsventil und ein zweites, als monostabiles Ventil ausgebildetes Ausfallbremsventil aufweist, wobei das erste Ausfallbremsventil und das zweite Ausfallbremsventil in der Ventilhauptleitung pneumatisch in Reihe geschaltet sind, und das erste Ausfallbremsventil von der ersten Steuereinheit steuerbar ist und das zweite Ausfallbremsventil von der zweiten Steuereinheit steuerbar ist. Die Ausfallsicherheitsventileinheit wird durch ein Ausfall-Relaisventil weitergebildet.

In einem dritten Aspekt gibt die Erfindung zur Lösung der Aufgabe weiterhin ein elektropneumatisches Bremssystem für ein Fahrzeug, insbesondere ein Nutzfahrzeug, an, umfassend ein Betriebsbremssystem und ein Feststellbremssystem, und eine Steuereinheit, ausgebildet zum Durchführen eines Verfahrens gemäß dem ersten Aspekt der Erfindung.

In einer Weiterbildung des elektropneumatischen Bremssystems ist eine Ausfallsicherheitsventileinheit gemäß dem zweiten Aspekt der Erfindung vorgesehen, wobei die Ausfallsicherheitsventileinheit in einem separaten Ansteuerzweig angeordnet ist.

Das elektropneumatische Bremssystem wird durch eine erste Steuereinheit und eine zweite Steuereinheit weitergebildet, die unabhängig voneinander mit Energie versorgt werden und/oder sich wenigstens teilweise gegenseitig in ihrer Funktion ersetzen können.

Das elektropneumatische Bremssystem wird dadurch weitergebildet, dass eine Betriebsbrems-Luftmenge, die von der Betriebsbrems-Entlüftungsfunktion aufgenommen oder entlüftet werden kann, größer oder gleich einer Federspeicherbremsdruck-Luftmenge ist, die von mindestens einem Federspeicherbremszylinder, insbesondere von sämtlichen Federspeicherbremszylindern des Feststellbremssystems, aufgenommen werden kann, derart dass das Entlüften des Federspeicher-Belüftungsdrucks durch die Betriebsbrems-Entlüftungsfunktion eine vollständige Entlüftung des mindestens einen Federspeicherbremszylinders zur Folge hat.

Das elektropneumatische Bremssystem wird dadurch weitergebildet, dass das elektropneumatische Bremssystem, bevorzugt die Steuereinheit oder ein Fahrzeugbus oder ein weiteres elektronisches Steuermittel, ausgebildet ist, bei dem Entlüften des Federspeicher-Belüftungsdrucks durch eine Betriebsbrems-Entlüftungsfunktion eine das Feststellbremssystem versorgende Druckversorgung zu unterbrechen, bevorzugt durch ein Abschalten eines Verdichters und/oder durch ein Absperren einer Zufuhrleitung und/oder durch ein Absenken des Vorratsdrucks. Das weitere elektronische Steuermittel kann insbesondere durch eine Einheit für autonomes Fahren gebildet sein.

In einem vierten Aspekt gibt die Erfindung zur Lösung der Aufgabe weiterhin ein Fahrzeug, insbesondere Nutzfahrzeug, an, ausgebildet zum Durchführen eines Verfahrens gemäß dem ersten Aspekt der Erfindung und/oder mit einer Ausfallsicherheitsventileinheit gemäß dem zweiten Aspekt der Erfindung und/oder mit einem elektropneumatischen Bremssystem gemäß dem dritten Aspekt der Erfindung.

Es soll verstanden werden, dass das Verfahren gemäß dem ersten Aspekt der Erfindung, die Ausfallsicherheitsventileinheit gemäß dem zweiten Aspekt der Erfindung, das elektropneumatische Bremssystem gemäß dem dritten Aspekt der Erfindung und das Fahrzeug gemäß dem vierten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine bevorzugte Ausführungsform eines elektropneumatischen Bremssystems, das ausgebildet ist zum Durchführen eines Verfahrens gemäß der Erfindung,
- Fig. 2A: eine erste bevorzugte Ausführungsform einer Ausfallsicherheitsventileinheit,
- Fig. 2B: eine zweite bevorzugte Ausführungsform einer Ausfallsicherheitsventileinheit,
- Fig. 2C: eine dritte bevorzugte Ausführungsform einer Ausfallsicherheitsventileinheit,
- Fig. 2D: eine vierte bevorzugte Ausführungsform einer Ausfallsicherheitsventileinheit,
- Fig. 3: eine weitere bevorzugte Ausführungsform eines elektropneumatischen Bremssystems mit einer Ausfallsicherheitsventileinheit,
- Fig. 4: ein pneumatisches Schaltbild eines Achsmodulators zur Verdeutlichung einer möglichen Betriebsbrems-Entlüftungsfunktion, und in
- Fig. 5: schematische Verläufe des Steuersignals, sowie des Federspeicher-Belüftungsdrucks, eines Vorratsdrucks und eines optionalen Betriebsbremsdrucks

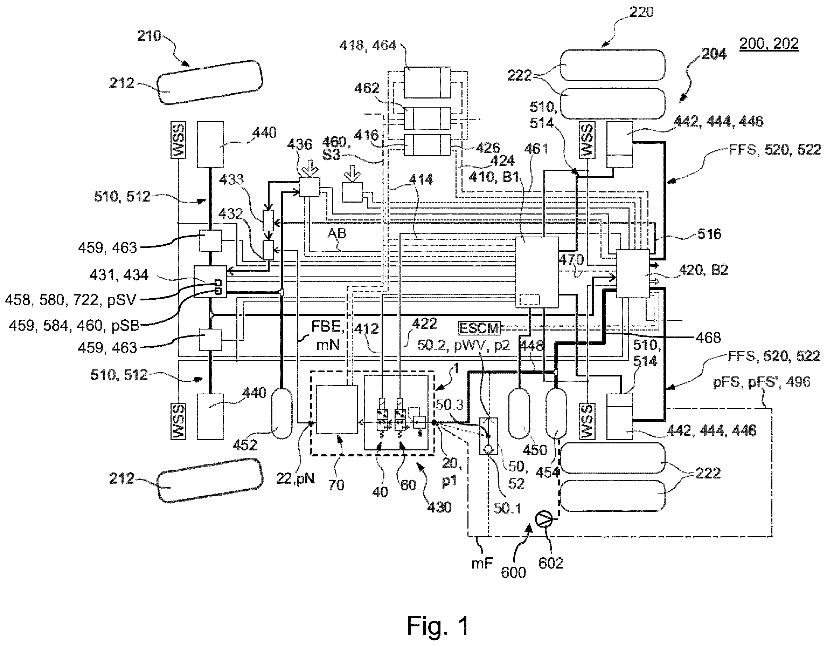

Fig. 1 zeigt ein elektropneumatisches Bremssystem 204 mit einer Ausfallsicherheitsventileinheit 1 gemäß der Erfindung. Das elektronisch steuerbare pneumatische Bremssystem 204 ist vorliegend in einem als Nutzfahrzeug 202 ausgebildeten Fahrzeug 200 eingesetzt, welches hier stark schematisch dargestellt ist, insbesondere mit zwei Vorderrädern 212 einer Vorderachse 210 und vier Hinterrädern 222 einer Hinterachse 220.

Ein Primärsystem B1 des elektropneumatischen Bremssystems 204 wird über eine erste Steuereinheit 410 gesteuert. Eine erste Rückfallebene B2 des elektropneumatischen Bremssystems 204 wird über eine zweite Steuereinheit 420 gesteuert. Die erste Steuereinheit 410 ist über eine erste Versorgungsleitung 414 mit einer ersten Energieversorgung 416 energieführend verbunden. Die zweite Steuereinheit 420 ist über eine zweite Versorgungsleitung 424 mit einer zweiten Energieversorgung 426 energieführend verbunden.

Die erste Steuereinheit 410 ist ausgebildet, über elektronische Ansteuerung eines elektronisch angesteuerten Bremswertgebers 436 und/oder eines Vorderachsmodulators 434 einen pneumatischen Vorderachskreis 512 eines Betriebsbremssystems 510 des elektropneumatischen Bremssystems 204 mit Druckluft aus einem weiteren Druckvorrat 452 zu versorgen, um mindestens einen, einem Vorderrad 212 zugeordneten Betriebsbremszylinder 440 zu aktuieren. Die erste Steuereinheit 410 ist weiter ausgebildet, jeweils eine Betriebsbremskammer 444 mindestens eines, einem Hinterrad 222 zugeordneten Federspeicherbremszylinders 442 über einen pneumatischen Hinterachskreis 514 mittels eines pneumatischen Ansteuerns zu aktuieren. Die Druckluft für den pneumatischen Hinterachskreis 514 wird dabei von einem noch weiteren Druckvorrat 450 bereitgestellt.

Die zweite Steuereinheit 420 ist ausgebildet, eine Feststellbremskammer 446 eines des jeweils dem Hinterrad 222 zugeordneten Federspeicherbremszylinders 442 über einen pneumatischen Hinterachskreis 522 eines Feststellbremssystems 520 durch Bereitstellen eines Federspeicher-Belüftungsdrucks pFS zu aktuieren. Die Druckluft für das Feststellbremssystem 520 wird dabei von einem Druckvorrat 454 bereitgestellt. Die zweite Steuereinheit 420 ist weiter ausgebildet, über einen Redundanzkreis 516 des Betriebsbremssystems 510 und ein weiteres Vorderachs-Wechselventil 433 den Vorderachsmodulator 434 - und darüber den pneumatischen Vorderachskreis 512 des Betriebsbremssystems 510 mit den Betriebsbremszylindern 440 pneumatisch anzusteuern. Somit ist die zweite Steuereinheit 420 ausgebildet, neben den Hinterrädern 222 zusätzlich die Vorderräder 212 des Fahrzeugs 200 zu bremsen, wodurch sie insbesondere geeignet ist, als Steuereinheit für die erste Rückfallebene B2 zu dienen.

Die erste Steuereinheit 410 und die zweite Steuereinheit 420 sind über eine Steuerverbindung 470 miteinander über einen BUS, vorzugsweise bidirektional signalführend, verbunden.

Der Hauptanschluss 20 der Ausfallsicherheitsventileinheit 1 ist pneumatisch mit dem Feststellbremssystem 520 verbunden. Besonders vorteilhaft ist der Hauptanschluss 20 - wie hier strichpunktiert dargestellt - pneumatisch über eine pneumatische Feststellbremsleitung 496 des Feststellbremssystems 520 zum Entlüften des Federspeicher-Belüftungsdrucks pFS mit dem Feststellbremssystem 520 verbunden. Es kann somit der Federspeicher-Belüftungsdruck pFS über die Feststellbremsleitung 496 und die Ausfallsicherheitsventileinheit 1 und weiter über einen Bremskreis 512, 514 des Betriebsbremssystems 510 entlüftet werden. Alternativ oder zusätzlich kann der Hauptanschluss 20 ausgebildet sein zum Entlüften eines von dem Feststell-Bremsdruck pFS abgeleiteten Druck pFS'.

Die Betriebsbrems-Entlüftungsfunktion FBE umfasst vorteilhaft das Öffnen eines Auslassventils 458 und/oder eines weiteren Auslassventils 459. Ein Auslassventil 458 kann in einem, einen Betriebsvorsteuerdruck pSV führenden Vorsteuerkreis 580 des Betriebsbremssystems 510 angeordnet sein. Das Auslassventil 458 ist vorteilhaft in einem Achsmodulator 431 angeordnet. Hier ist schematisch beispielsweise ein Vorsteuer-Entlüftungsventil 722 des Vorderachsmodulators 434 als Auslassventil 458 gezeigt. Ein weiteres Auslassventil 459 kann in einem, einen Betriebsbremsdruck pSB führenden Hauptkreis 584 angeordnet sein. Das weitere Auslassventil 459 kann vorteilhaft in einem Achsmodulator 431, oder auch in einer weiteren pneumatischen Komponente wie beispielsweise einem ABS-Ventil 463, angeordnet sein. Hier ist beispielhaft schematisch das weitere Auslassventil 459 als ein pneumatisches Hauptventil 460 des Vorderachsmodulators 434 gezeigt. Alternativ oder zusätzlich kann das weitere Auslassventil 459 als ABS-Ventil 463, wie hier ebenfalls schematisch gezeigt, ausgebildet sein.

In weiteren vorteilhaften Ausführungsformen kann die Ausfallsicherheitsventileinheit 1 ein Auswahlventil 50 aufweisen, das insbesondere als ein Wechselventil 52 ausgebildet ist. Das Auswahlventil 50 ist ausgebildet, denjenigen Anschluss von einem ersten Auswahlventilanschluss 50.1 und einem zweiten Auswahlventilanschluss 50.2 mit einem dritten Auswahlventilanschluss 50.3 pneumatisch zu verbinden, an dem der höhere Druck anliegt.

Insbesondere kann in Ausführungsformen mit einem Auswahlventil 50 am zweiten Ventilanschluss 50.2 ein Vorratsdruck pV von einer weiteren Druckluftquelle, insbesondere dem Druckvorrat 454, einem weiteren Druckvorrat 452 oder einem noch weiteren Druckvorrat 450, bereitgestellt werden. Vorliegend ist beispielhaft punktiert eine pneumatische Verbindung zwischen dem zweiten Auswahlventilanschluss 50.2 und dem Druckvorrat 454 dargestellt. Über das Auswahlventil 50 kann vorteilhaft sichergestellt werden, dass der am Hauptanschluss 20 anliegende entweder der Feststell-Bremsdruck pFS oder der Vorratsdruck pV ist, je nachdem, an welchem Auswahlventilanschluss 50.1, 50.2 der höhere Druck anliegt. Hierdurch wird vorteilhaft eine Redundanz erreicht, falls an einem der beiden Auswahlventilanschlüsse 50.1, 50.2, beispielsweise aufgrund einer Leckage oder eines Systemausfalls keine Druckluft zur Verfügung stehen sollte. In Ausführungsformen kann vorgesehen sein, dass der Hauptanschluss 20 nicht direkt - wie hier gezeigt - mit der Vorratsleitung 448 verbunden ist, sondern lediglich über das Auswahlventil 50. Auch kann in noch weiteren Ausführungsformen vorgesehen sein, dass der Hauptanschluss 20 nur mit der Feststellbremsleitung 496 verbunden ist und insbesondere gar nicht mit einem Druckvorrat 450, 452, 454.

In Ausführungsformen, in denen insbesondere über ein Auswahlventil 50 ein Vorratsdruck pV bereitgestellt wird, werden vorteilhaft Maßnahmen zum Absenken des Vor-ratsdrucks pV vorgesehen, damit ein Entlüften des Federspeicher-Belüftungsdrucks pFS erreicht wird. Zu diesen Maßnahmen kann vorteilhaft das Unterbrechen einer das Feststellbremssystem 520 versorgenden Druckversorgung 600 zählen, bevorzugt durch ein Abschalten eines Verdichters 602 und/oder durch ein Absperren einer Zufuhrleitung 468 und/oder durch ein Absenken des Vorratsdrucks pV. Ein Abschalten des Verdichters 602 kann auch mittelbar durch ein Absperren der Zufuhrleitung 468 und dadurch ein druckgesteuertes Abschalten des Verdichters 602 erfolgen. Ein Absperren einer Zufuhrleitung 468 kann mittels eines hier nicht gezeigten Ventils erfolgen. Ein Absenken des Vorratsdrucks pV kann vorteilhaft durch ein Entleeren mindestens eines Druckvorrats 450, 452, 454 erfolgen.

Das Auswahlventil 50 und die Bereitstellung eines Vorratsdrucks pV sind als optional zu betrachten, dies gilt insbesondere in die in Fig. 1, Fig.2A, Fig. 2B, Fig. 2C und Fig. 3 gezeigten Ausführungsformen.

In vorteilhaften Ausführungsformen kann zusätzlich zum Entlüften des mindestens einen Federspeicherbremszylinders 442 durch die Betriebsbrems-Entlüftungsfunktion FBE der durch die Ausfallsicherheitsventileinheit 1 geleitete Federspeicher-Belüftungsdruck pFS als Betriebsbrems-Ausfallbremsdruck pN zum Auslösen einer Betriebsbrems-Ausfallbremsung BAB über den Ausfallbremsanschluss 22 bereitgestellt werden.

Die Ausfallsicherheitsventileinheit 1 weist weiter eine Bistabilventileinheit 70 auf, welche mittels der ersten Versorgungsleitung 414 mit Energie versorgt wird und mittels einer Fahrzeugbus-Leitung 460 mit einem ersten Fahrzeugbus 462 verbunden ist. Der erste Fahrzeugbus 462 ist über die Fahrzeugbus-Leitung 460 weiter mit der ersten Steuereinheit 410 verbunden. Der erste Fahrzeugbus 462 ist vorliegend mit einer weiteren Fahrzeugbus-Leitung 461 mit der zweiten Steuereinheit 420 verbunden.

Die Bistabilventileinheit 70 mit einem hier nicht gezeigten Bistabilventil 72 hat die Eigenschaft, dass es von einem Fehlerfall, insbesondere im Fall eines Doppelfehlers FD, nicht direkt beeinflusst wird, weil es aufgrund seiner bistabilen Eigenschaft in der jeweils vorher geschalteten Stellung verharrt.

Im Unterschied dazu haben das erste Ausfallbremsventil 40 und das zweite Ausfallbremsventil 60 aufgrund ihres monostabiles Verhaltens die Eigenschaft, in einem stromlosen Zustand in eine Stellung, vorliegend jeweils die erste Stellung 40A, 60A, zurückzufallen. Auf diese Weise kann gemäß dem Konzept der Erfindung in einem Fall, in dem sowohl am ersten Ausfallbremsventil 40 als auch am zweiten Ausfallbremsventil 60 kein Steuersignal S1, S2 oder das Steuersignal S1, S2 als ein Nullsignal anliegt, ein selbsttätiges Schalten der Ausfallbremsventile 40, 60 in ihre erste Stellung 40A, 60A erreicht werden. Ein solcher Fall eines ausbleibenden Steuersignals S1, S2 oder Nullsignals tritt insbesondere bei einem Ausnahmefehler FA oder Stromausfall FS in den Steuereinheiten 410, 420 auf.

Wenn sich das Bistabilventil 72 in seiner zweiten Stellung 72B befindet, ist dies vorteilhaft geeignet für einen automatischen, insbesondere autonomen Fahrbetrieb des Fahrzeugs 200, weil in diesem Fall eine pneumatische Verbindung zwischen dem ersten und zweiten Bistabilventilanschluss 72.1, 72.2 hergestellt ist und auf diese Weise - im Falle eines stromlosen Zurückfallens der ersten und zweiten Ausfallbremsventile 40, 60 in ihre erste Stellung 40A, 60A - ein Entlüften des mindestens einen Federspeicherbremszylinders 442 erfolgt und/oder ein Betriebsbrems-Ausfallbremsdruck pN am Ausfallbremsanschluss 22 zwecks Bremsung des Fahrzeugs 200 bereitgestellt wird. In einem automatischen, insbesondere autonomen Fahrbetrieb kann das Fahrzeug 200 durch eine Einheit 464 für autonomes Fahren gesteuert werden, die mit dem ersten Fahrzeugbus 462 signalleitend verbunden ist.

Wenn sich das Bistabilventil 72 in seiner ersten Stellung 72A befindet, ist dies vorteilhaft geeignet für einen manuellen Fahrbetrieb des Fahrzeugs 200. In diesem Fall wird durch ein Sperren der Ventilhauptleitung 30 verhindert, dass im Falle eines Doppelfehlers FD eine Bremsung durch ein Entlüften des mindestens einen Federspeicherbremszylinders 442 und/oder durch ein Bereitstellen eines Ausfallbremsdrucks pN am Ausfallbremsanschluss 22 durchgeführt wird.

Die Betriebsbrems-Entlüftungsfunktion FBE ist vorteilhaft zum Aufnehmen und/oder zum Entlüften einer Betriebsbrems-Luftmenge mN ausgebildet, die größer oder gleich einer Federspeicherbremsdruck-Luftmenge mF ist. Die Federspeicherbremsdruck-Luftmenge mF entspricht der Luftmenge, die von dem mindestens einen Federspeicher Bremszylinder 442 aufgenommen werden können, der zur Feststellbremse-Ausfallbremsung BAF entlüftet werden muss.

Beim Bereitstellen des Betriebsbrems-Ausfallbremsdrucks pN am Ausfallbremsanschluss 22 gelangt der Betriebsbrems-Ausfallbremsdrucks pN über ein Vorderachs-Wechselventil 432 und einen Vorderachsmodulator 434 an zwei, jeweils einem Vorderrad 212 zugeordneten Betriebsbremszylinder 440. Die Betriebsbremszylinder 440 werden durch Beaufschlagung mit dem Betriebsbrems-Ausfallbremsdrucks pN aktuiert, wodurch eine Bremsung der Vorderräder 212 erreicht wird.

Die Ausfallsicherheitsventileinheit 1 ist vorteilhaft in einem separaten Ansteuerzweig 430 des elektropneumatischen Bremssystems 204 angeordnet, der unabhängig zu der regulären Aktuierung der Betriebsbremszylinder 440, insbesondere über einen Bremswertgeber 436 und/oder den Federspeicherbremszylinder 442, bereitgestellt wird. Generell ist auch eine Bereitstellung eines Betriebsbrems-Ausfallbremsdrucks pN für einen anderen Bremszylinder, beispielsweise an die Betriebsbremskammer 444 der den Hinterrädern 222 zugeordneten Federspeicherbremszylinder 442, denkbar.

Ein Diagnoseablauf AD zum Prüfen der Funktionsweise der Ausfallsicherheitsventileinheit 1 kann vorteilhaft in einem Diagnosefall FT von einer elektronischen Steuereinheit, insbesondere der Steuereinheit 410 oder einer externen Steuereinheit 418, insbesondere einer Einheit 464 für autonomes Fahren, durchgeführt werden. Die externe Steuereinheit 418 ist insbesondere zur Überwachung der Steuereinheiten 410, 420 mit diesen signalführend verbunden, insbesondere über eine Fahrzeugbus-Leitung 460, 461. Die externe Steuereinheit 418 kann insbesondere vorteilhaft durch eine andere elektronische Steuereinheit des Fahrzeugs 200 oder als Teil einer solchen anderen elektronischen Steuereinheit gebildet sein. Eine solche andere elektronische Steuereinheit, insbesondere die externe Steuereinheit 418, kann insbesondere eine Einheit 464 für autonomes Fahren, eine elektronische Steuereinheit eines Lenksystems, eine elektronische Steuereinheit eines Feststellbremssystems und/oder eine elektronische Steuereinheit einer Luftaufbereitungsanlage sein. Eine Einheit 464 für autonomes Fahren kann insbesondere ein sogenannter virtueller Fahrer sein, der auf Basis von Sensordaten, Betriebsdaten, Routendaten, Solldaten und dergleichen Daten Fahrbefehle generiert und diese dem Fahrzeug bereitstellt. Fahrbefehle können Lenkbefehle, Beschleunigungsbefehle und Bremsbefehle, insbesondere eine Bremsanforderung AB, umfassen.

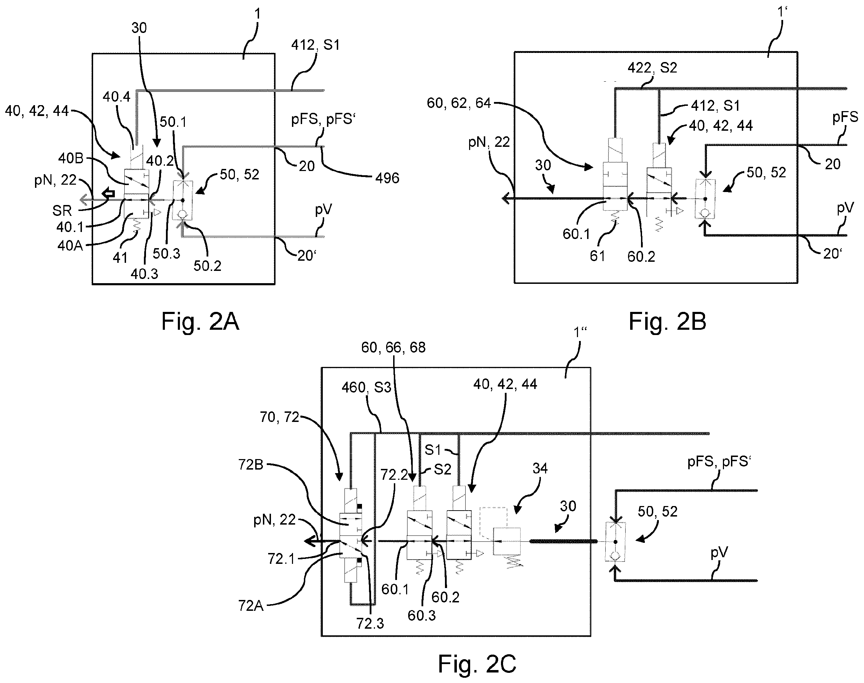

Fig. 2A zeigt eine erste bevorzugte Ausführungsform einer Ausfallsicherheitsventileinheit 1 im Detail. Die Ausfallsicherheitsventileinheit 1 weist ein monostabiles Ausfallbremsventil 40 auf. Das Ausfallbremsventil 40 ist über eine Steuerleitung 412 signal- und energieführend mit der Steuereinheit 410 verbunden.

Das Ausfallbremsventil 40 ist vorliegend in einem nicht angesteuerten und stromlosen Zustand dargestellt, in dem es sich in einer ersten Stellung 40A befindet. In der ersten Stellung 40A ist eine pneumatische Verbindung zwischen einem ersten Ventilanschluss 40.1 und einem zweiten Ventilanschluss 40.2 des Ausfallbremsventils 40 hergestellt. Wenn sich das Ausfallbremsventil 40 in der ersten Stellung 40A befindet, der Federspeicher-Belüftungsdruck pFS mindestens eines Federspeicherbremszylinders 442 über den Hauptanschluss 20 und den Ausfallbremsanschluss 22 zu entlüften und vorzugsweise als Betriebsbrems-Ausfallbremsdruck pN bereitzustellen.

Über ein Bereitstellen eines Steuersignals S1 über die Steuerleitung 412 kann das Ausfallbremsventil 40 aus der ersten Stellung 40A gegen den Widerstand einer Rückstellfeder 41 in eine zweite Stellung 40B geschaltet werden. In der zweiten Stellung 40B wird eine pneumatische Verbindung zwischen dem ersten Ventilanschluss 40.1 und einem Entlüftungsanschluss 40.3 hergestellt. In einem normalen Betrieb des Fahrzeugs 200 ist insbesondere vorgesehen, dass sich das Ausfallbremsventil 40 in seiner zweiten Stellung 40B befindet. In diesem Zustand besteht somit keine pneumatische Verbindung zwischen dem Hauptanschluss 20 und dem Ausfallbremsanschluss 22, da die pneumatische Verbindung an dem Ausfallbremsventil 40 unterbrochen ist.

Bei einem Fehlerfall FF, insbesondere wenn ein Steuersignal S1 ausbleibt - und ein Magnetteil 40.4 des Ausfallbremsventils 40 somit stromlos ist - geht das Ausfallbremsventil 40 durch die von der Rückstellfeder 41 erzeugte Rückstellkraft selbsttätig zurück in seine erste Stellung 40A.

Ein solcher Fehlerfall FF kann beispielsweise durch einen Stromausfall FS gegeben sein, wenn die Steuereinheit 410 ohne Energieversorgung ist. In einem solchen Stromausfall wird entsprechend kein Steuersignal S1 an das Ausfallbremsventil 40 geleitet.

Des Weiteren kann sich ein Fehlerfall FF auch darin äußern, dass in der Steuereinheit 410 ein Ausnahmefehler FA auftritt, und von dem Steuergerät 410 als Fehlermaßnahme (insbesondere in Ermangelung anderer Programmalternativen) ein Nullsignal geschaltet wird, und somit - zum Schalten des Ausfallbremsventils 40 in die erste Stellung 40A - das Steuersignal S1 gezielt auf 0 gesetzt wird.

Ein Diagnosefall FT kann, vorzugsweise von der Steuereinheit 410 oder einer externen Steuereinheit 418, veranlasst werden, um die Funktionsweise der Ausfallsicherheitsventileinheit zu überprüfen. Der Diagnosefall FT kann im Rahmen eines Diagnoseablaufs veranlasst werden. In einem Diagnosefall FT wird insbesondere ein Ansteuern der Ausfallbremsventile unterbrochen, indem das Bereitstellen des Steuersignals S1, S2 beendet wird.

Fig. 2B zeigt eine weitere bevorzugte Ausführungsform einer Ausfallsicherheitsventileinheit 1' gemäß der Erfindung. Im Vergleich zu der in Fig. 2A gezeigten Ausführungsformen weist die hier gezeigte Ausfallsicherheitsventileinheit 1' ein weiteres Ausfallbremsventil 60 auf, dass in der Ventilhauptleitung 30 angeordnet und mit dem Ausfallbremsventil 40 pneumatisch in Reihe geschaltet ist. Das weitere Ausfallbremsventil 60 ist vorliegend als 2/2-Wegeventil 62, insbesondere als 2/2-Wege-Magnetventil 64 ausgebildet.

In anderen bevorzugten Ausführungsformen kann das weitere Ausfallbremsventil 60 ebenso als 3/2-Wegeventil 66, insbesondere als 3/2-Wege-Magnetventil 68 ausgebildet sein, wie beispielsweise in Fig. 2C gezeigt. Das weitere Ausfallbremsventil 60 ist insbesondere monostabil ausgebildet derart, dass es sich im nicht angesteuerten, insbesondere stromlosen, Zustand in einer weiteren ersten Stellung 60A befindet. Insbesondere weist das weitere Ausfallbremsventil 60 eine weitere Rückstellfeder 61 auf, welche das weitere Ausfallbremsventil 60 im nicht angesteuerten Zustand in die weitere erste Stellung 60A bewegt. In der weiteren ersten Stellung 60A ist ein erster weiterer Ventilanschluss 60.1 des weiteren Ausfallbremsventils 60 mit einem zweiten weiteren Ventilanschluss 60.2 des weiteren Ausfallbremsventils 60 pneumatisch verbunden. Das weitere Ausfallbremsventil 60 wird insbesondere über ein weiteres Steuersignal S2 über eine weitere Steuerleitung 422, insbesondere von der Steuereinheit 410 oder einer weiteren Steuereinheit 420, angesteuert.

Eine Ausführungsform mit einem weiteren Ausfallventil 60 ist insbesondere vorteilhaft bei einem optionalen Bremssystem 204, das eine weitere Steuereinheit 420 oder dergleichen redundante Steuereinrichtung aufweist. In einem solchen Bremssystem 204 ist insbesondere die Steuereinheit 410 einem Primärsystem B1 und die weitere Steuereinheit 420 einer ersten Rückfallebene B2 zugeordnet. Bei einem Fehlerfall FF im Primärsystem B1, insbesondere in der Steuereinheit 410, kann somit weiterhin über die noch intakte Rückfallebene B2 die Ausfallsicherheitsventileinheit 1' angesteuert werden, insbesondere ein Entlüften des mindestens einen Federspeicherbremszylinders 442 und/oder ein Bereitstellen des Ausfallbremsdrucks pN durch ein anhaltendes Ansteuern des weiteren Ausfallbremsventil 60 in der weiteren zweiten Stellung 60B zurückgehalten werden. Mittels eines als 2/2-Wege-Magnetventil 64 ausgebildeten weiteren Ausfallbremsventils 60 ist weiterhin - vorteilhaft bei Ausführungsformen mit einer Funktionalität zum Auslösen einer Betriebsbrems-Ausfallbremsung BAB - ein Modulieren des Betriebsbrems-Ausfallbremsdrucks pN möglich. Dadurch wird vorteilhaft ein gestuftes Bremsen, insbesondere über einen Redundanzanschluss 718, auch bei einem Teilausfall ermöglicht, insbesondere wenn ein Primärsystem B1 ausgefallen ist, und eine Bremsfunktionalität über den separaten Ansteuerzweig durch die Ausfallsicherheitsventileinheit 1 gewährleistet wird.

Im Falle eines Doppelfehlers FD, das heißt wenn sowohl in der Steuereinheit 410, als auch in der weiteren Steuereinheit 420 ein Fehlerfall FF, insbesondere in Form eines Ausnahmefehlers FA und/oder eines Stromausfalls FS, vorliegt, fallen sowohl das Ausfallbremsventil 40 als auch das weitere Ausfallbremsventil 60 aufgrund ihres monostabilen Verhaltens jeweils in ihre erste Stellung 40A, 60A, um den mindestens einen Federspeicherbremszylinder 442 zu entlüften und/oder einen Betriebsbrems-Ausfallbremsdruck pN am Ausfallbremsanschluss 22 bereitzustellen.

In Fig. 2C ist eine noch weitere bevorzugte Ausführungsformen einer Ausfallsicherheitsventileinheit 1" dargestellt. Im Unterschied zu der in Fig. 2B gezeigten Ausführungsform weist die Ausfallsicherheitsventileinheit 1" ein Bistabilventil 72 auf. Als weiterer Unterschied zu der in Fig. 2B gezeigten Ausführungsform ist vorliegend das weitere Ausfallbremsventil 60 als 3/2-Wegeventil 66, insbesondere als 3/2-Wege-Magnetventil 68 ausgebildet. Vorteilhaft sind das Ausfallbremsventil 40 und das weitere Ausfallbremsventil 60 wie hier gezeigt baugleich ausgebildet. Vorteilhaft weist das als 3/2-Wegeventil 66 ausgebildete weitere Ausfallbremsventil 60 wie hier gezeigt einen weiteren Entlüftungsanschluss 60.3 auf, der in der zweiten Stellung 60B mit dem ersten weiteren Ventilanschluss 60.1 verbunden ist. Über den weiteren Entlüftungsanschluss 60.3 kann der Ausfallbremsanschluss 22 vorteilhaft entlüftet werden, wenn das weitere Ausfallbremsventil 60 in seine zweite Stellung 60B geschaltet ist.

Vorteilhaft kann in sämtlichen Ausführungsformen ein in der Ventilhauptleitung 30 angeordnetes Druckbegrenzungsventil 34 vorhanden sein, wie in Fig. 2C dargestellt. Mittels eines Druckbegrenzungsventils 34 kann ein vordefinierter Luftdruck eingestellt werden, mit dem der Betriebsbrems-Ausfallbremsdruck pN am Ausfallbremsanschluss 22 bereitgestellt wird, um eine geeignete Bremswirkung für das Fahrzeug bei der Betriebsbrems-Ausfallbremsung zu erreichen.

In optionalen, weiteren Ausführungsformen wird - anders als in Fig. 2C gezeigt - das weitere Ausfallbremsventil 60 ebenfalls über das Steuersignal S1 gemeinsam mit dem Ausfallbremsventil 40 angesteuert. Insbesondere kann das weitere Ausfallbremsventil 60 gemeinsam mit dem Ausfallbremsventil 40 über die Steuerleitung 412, insbesondere gemeinsam mit dem Ausfallbremsventil 40 von der Steuereinheit 410, angesteuert werden. Eine mehrfache Anordnung von Ausfallbremsventilen 40 ,60, insbesondere eine Anordnung mit einem Ausfallbremsventil 40 und einem weiteren Ausfallbremsventil 60, hat den Vorteil einer Redundanz bei einem Ventilfehler, insbesondere einem mechanischen oder elektrischen Ventilfehler, bei einem der Ausfallbremsventile 40, 60. Sollte sich beispielsweise eines der Ausfallbremsventile 40, 60 aufgrund eines Verklemmens oder eines defekten Magnetteils nicht mehr ansteuern lassen und aus der ersten Stellung 40A, 60A in die zweite Stellung 40B, 60B bewegen lassen, würde sich das Fahrzeug unbeabsichtigt in einem Zustand einer durch die Ausfallsicherheitsventileinheit 1" hervorgerufenen Ausfallbremsung BA befinden. Durch das weitere, noch funktionierende Ausfallbremsventil kann dieser unbeabsichtigte Zustand behoben und/oder verhindert werden.

Vorliegend ist das Bistabilventil 72 in der Ventilhauptleitung 30 angeordnet. Vorteilhaft kann in sämtlichen Ausführungsformen ein in der Ventilhauptleitung 30 angeordnetes Bistabilventil 72 vorhanden sein, wie in Fig. 2C dargestellt, insbesondere auch in den in Fig. 2A und Fig. 2B gezeigten Ausführungsformen.

Das Bistabilventil 72 ist insbesondere über eine noch weitere Steuerleitung 460 signal- und/oder energieführend mit einer Steuerung, insbesondere der Steuereinheit 410 oder einer weiteren Steuereinheit 420 oder einer hier nicht gezeigten, noch weiteren Steuereinheit, verbunden und über ein drittes Steuersignal S3 steuerbar. Das Bistabilventil 72 hat die Eigenschaft, dass es von einem Fehlerfall FF nicht direkt beeinflusst wird, weil es aufgrund seiner bistabilen Eigenschaft in einer vorher geschalteten Stellung verharrt.

Im Unterschied dazu haben das Ausfallbremsventil 40 und das weitere Ausfallbremsventil 60 aufgrund ihres monostabiles Verhaltens die Eigenschaft, in einem stromlosen Zustand in eine Stellung, vorliegend jeweils die erste Stellung 40A, 60A, zurückzufallen. Auf diese Weise kann gemäß der Erfindung in einem Fall, in dem am Ausfallbremsventil 40, insbesondere auch am weiteren Ausfallbremsventil 60 kein Steuersignal S1, S2 oder das Steuersignal S1, S2 als ein Nullsignal anliegt, ein selbsttätiges Schalten der Ausfallbremsventile 40, 60 in ihre erste Stellung 40A, 60A erreicht werden. Ein solcher Fall eines ausbleibenden Steuersignals S1, S2 oder Nullsignals tritt insbesondere bei einem Ausnahmefehler FA oder Stromausfall FS in den Steuereinheiten 410, 420 auf.

Wenn sich das Bistabilventil 72 in seiner zweiten Stellung 72B befindet, ist dies bevorzugt geeignet für einen automatischen, insbesondere autonomen Fahrbetrieb des Fahrzeugs 200, weil in diesem Fall eine pneumatische Verbindung zwischen einem ersten und zweiten Bistabilventilanschluss 72.1, 72.2 hergestellt ist und auf diese Weise - im Falle eines Zurückfallens der Ausfallbremsventile 40, 60 in ihre erste Stellung 40A, 60A - ein Entlüften des Federspeicher-Belüftungsdrucks pFS für die Federspeicher-Ausfallbremsung BAF erfolgt und/oder Betriebsbrems-Ausfallbremsdruck pN am Ausfallbremsanschluss 22 für eine Betriebsbrems-Ausfallbremsung BAB bereitgestellt wird. In einem automatischen, insbesondere autonomen Fahrbetrieb kann das Fahrzeug 200 beispielsweise durch eine Einheit 464 für autonomes Fahren gesteuert werden, die mit dem Fahrzeug-Datenbus 462 signalleitend verbunden ist.

Wenn sich das Bistabilventil 72 in seiner ersten Stellung 72A befindet, ist dies insbesondere geeignet für einen manuellen Fahrbetrieb des Fahrzeugs 200. In diesem Fall wird durch ein Sperren der Ventilhauptleitung 30 verhindert, dass in einem Fehlerfall FF, insbesondere im Fall eines Doppelfehlers FD, eine Federspeicher-Ausfallbremsung BAF und/oder eine Betriebsbrems-Ausfallbremsung BAB durchgeführt wird.

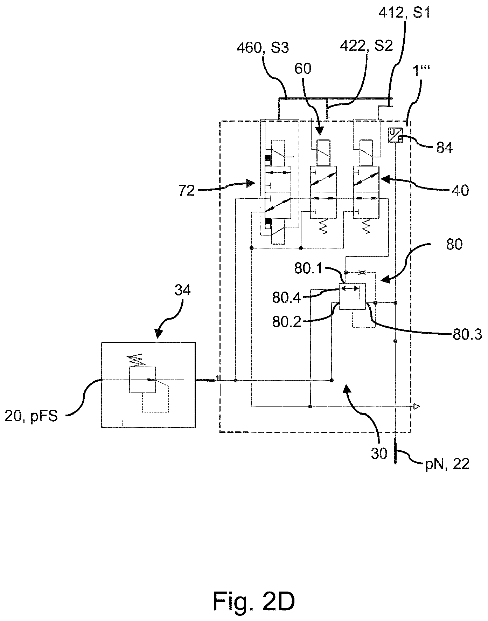

In Fig. 2D ist eine noch weitere bevorzugte Ausführungsform einer Ausfallsicherheitsventileinheit 1‴ mit einem Drucksensor 84 dargestellt. Der Drucksensor 84 ist vorliegend am Ausfallbremsanschluss 22 angeordnet und ausgebildet zum Messen des bereitgestellten Ausfallbremsdrucks pN. Mittels eines Drucksensors 84 kann vorteilhaft die Druckreaktion und somit die Funktionsweise der Ausfallsicherheitsventileinheit 1 plausibilisiert und/oder geprüft werden. In sämtlichen Ausführungsformen kann ein solcher Drucksensor 84 vorgesehen sein.

In sämtlichen Ausführungsformen kann weiterhin ein Ausfall-Relaisventil 80, wie in Fig. 2D dargestellt, vorgesehen sein. Das Ausfall-Relaisventil 80 weist einen Ausfall-Steueranschluss 80.1, einen Ausfall-Vorratsanschluss 80.2, einen Ausfall-Arbeitsanschluss 80.3 und einen Ausfall-Entlüftungsanschluss 80.4 auf. Der Ausfall-Vorratsanschluss 80.2 ist mit dem Hauptanschluss 20 pneumatisch verbunden. Der Ausfall-Steueranschluss 80.1 ist mit der Ventilhauptleitung 30 verbunden derart, dass die Ventilhauptleitung einschließlich sämtlicher Ausfallbremsventile 40, 60 und etwaiger Bistabilventile 72 die Steuerleitung des Ausfall-Relaisventils 80 bilden. Der Ausfall-Arbeitsanschluss 80.3 ist mit dem Ausfallbremsanschluss 22 pneumatisch verbunden. Das Ausfall-Relaisventil 80 wirkt luftmengenverstärkend, weshalb die von den Ausfallbremsventilen und ggf. von dem Bistabilventil zu schaltenden Luftmengen vorteilhaft geringer sind, und folglich diese Ventile kleiner dimensioniert werden können und/oder weniger beansprucht werden. Gleichzeitig kann ein relativ großer Luftmengenstrom über den Ausfall-Vorratsanschluss 80.2 geleitet werden zum schnellen Abbauen des Federspeicher-Belüftungsdrucks pFS.

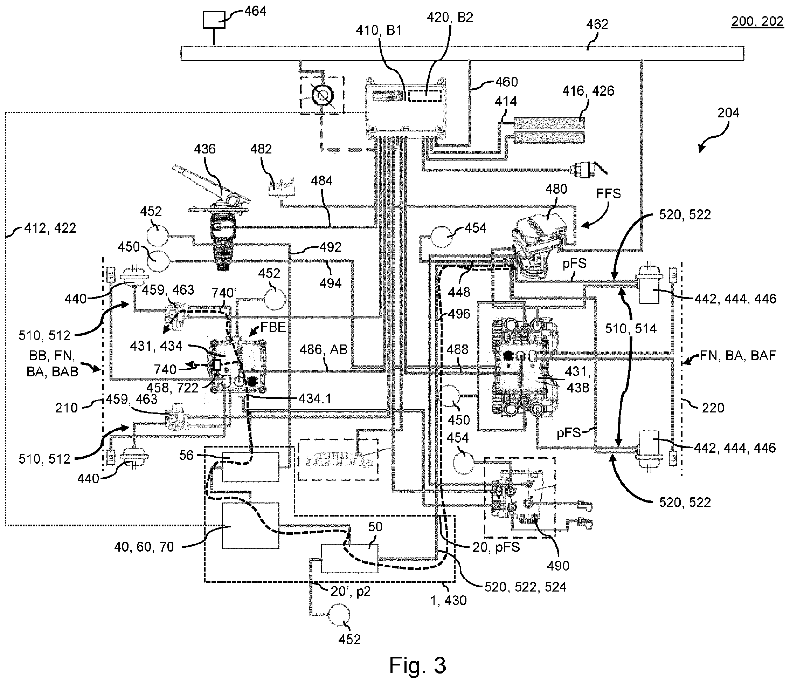

Fig. 3 zeigt ein elektropneumatisches Bremssystem 204 mit einer Ausfallsicherheitsventileinheit 1 für eine Ausfallbremsfunktion FN gemäß der Erfindung. Vorteilhaft umfasst die Ausfallbremsfunktion FN eine Federspeicher-Ausfallbremsung BAF und/oder eine Betriebsbrems-Ausfallbremsung BAB. Das elektropneumatische Bremssystem 204 ist vorliegend in einem als Nutzfahrzeug 202 ausgebildeten Fahrzeug 200 eingesetzt, welches hier stark schematisch dargestellt ist, insbesondere mit einer angedeuteten Vorderachse 210 und einer angedeuteten Hinterachse 220.

Das elektropneumatische Bremssystem 204 wird über eine Steuereinheit 410 gesteuert. Die Steuereinheit 410 ist über eine Versorgungsleitung 414 mit einer Energieversorgung 416 energieführend verbunden.

Die Steuereinheit 410 ist über eine Bremswertgeber-Steuerleitung 484 elektrisch signalleitend mit einem Bremswertgeber 436 verbunden zum Empfangen von Bremssignalen. Die Steuereinheit 410 ist weiter ausgebildet, in Abhängigkeit der Bremssignale, oder in Abhängigkeit etwaiger Fahrprogramme einer Einheit 464 für autonomes Fahren in einem automatischen Fahrbetrieb, einen Vorderachsmodulator 434 über eine elektrisch signalführende Vorderachsmodulator-Steuerleitung 486 anzusteuern. Insbesondere kann über die Vorderachsmodulator-Steuerleitung 486 eine elektrische oder elektronische Bremsanforderung AB an den Achsmodulator 431 eine Bremsung ausgelöst werden. Eine elektronische Bremsanforderung AB kann insbesondere durch einen CAN- und/oder XBR-Befehl gebildet sein. Der Vorderachsmodulator 434 ist ausgebildet, in Abhängigkeit dieses Ansteuerns einen pneumatischen Vorderachsbremskreis 512 eines Betriebsbremssystems 510 des elektropneumatischen Bremssystems 204 mit Druckluft aus einem weiteren Druckvorrat 452 zu versorgen, um mindestens einen, einem Vorderrad 212 zugeordneten, Betriebsbremszylinder 440 zum Ausführen einer Betriebsbremsung BB zu aktuieren. Die Steuereinheit 410 ist weiter ausgebildet, jeweils eine Betriebsbremskammer 444 mindestens eines, einem Hinterrad 222 zugeordneten, Federspeicherbremszylinders 442 über einen pneumatischen Hinterachsbremskreis 514 über ein pneumatisches Ansteuern zu aktuieren. Die Steuereinheit 410 ist über eine Hinterachsmodulator-Steuerleitung 488 elektrisch signalführend mit einem Hinterachsmodulator 438 verbunden. Die Druckluft für den pneumatischen Hinterachsbremskreis 514 wird dabei von einem noch weiteren Druckvorrat 450 bereitgestellt und über den Hinterachsmodulator 438 bei einem Ansteuern durch die Steuereinheit 410 an die Betriebsbremskammern 444 geleitet. Die Steuereinheit 410 ist somit ausgebildet, sowohl die Vorderräder 212 als auch die Hinterräder 222 des Fahrzeugs 204 zu bremsen. Die Vorderachsmodulator-Steuerleitung 486 und/oder die Hinterachsmodulator-Steuerleitung 488 sind insbesondere als Fahrzeug-Datenbus-Leitungen, insbesondere CAN-Leitungen, ausgebildet.

Das Bremssystem 204 weist eine Feststellbremsfunktion FFS mit einem Feststellbrems-Modul 480 auf. Die Feststellbremsfunktion FFS wird vorzugsweise mittels eines Feststellbremssystems 520 und/oder des Feststellbrems-Moduls 480 umgesetzt. Durch die einer Feststellbremsfunktion FFS kann ein Federspeicher-Belüftungsdruck pFS zum Belüften von Feststellbremszylindern 442 ausgesteuert werden. Demnach umfasst die Feststellbremsfunktion FFS vorzugsweise ein Feststellbrems-Modul 480. Das Feststellbrems-Modul 480 des Bremssystems 204 ist ausgebildet, eine Feststellbremskammer 446 eines der beiden jeweils dem Hinterrad 222 zugeordneten Feststellbremszylinders 442 über einen pneumatischen Hinterachsbremskreis 522 des Feststellbremssystems 520, insbesondere über eine pneumatische Feststellbremsleitung 496, mittels eines ausgesteuerten Federspeicher-Belüftungsdrucks pFS zu aktuieren. Das Feststellbrems-Modul 480 ist elektrisch signalführend mit einem Feststellbrems-Bedienelement 482 verbunden. Über das Feststellbrems-Bedienelement 482 kann somit der pneumatische Hinterachsbremskreis 522 des Feststellbremssystems 520 aktiviert und deaktiviert werden. Das Feststellbrems-Modul 480 ist über eine Vorratsleitung 448 mit dem Druckvorrat 454 zwecks Versorgung mit Druckluft pneumatisch verbunden.

Der Hinterachsmodulator 438 ist über die Hinterachsmodulator-Steuerleitung 488 signalführend mit der Steuereinheit 410 verbunden. Die Druckluft für das Feststellbremssystem 520 wird dabei von einem Druckvorrat 454 bereitgestellt.

Der Bremswertgeber 436 ist über eine pneumatische Vorderachsmodulator-Steuerleitung 492 pneumatisch mit einem pneumatischen Steueranschluss 434.1, insbesondere einem Redundanzanschluss 718, des Vorderachsmodulators 434 verbunden, um den pneumatischen Vorderachsbremskreis 512 anzusteuern. Der Vorderachsmodulator 434 ist insbesondere ausgebildet, bei einer pneumatischen Druckbeaufschlagung über die Vorderachsmodulator-Steuerleitung 492 einen Bremsdruck an die Betriebsbremszylinder 440 auszusteuern. Der Bremswertgeber 436 ist über eine pneumatische Hinterachsmodulator-Steuerleitung 494 - in analoger Weise zum Vorderachsmodulator 434 - pneumatisch mit dem Hinterachsmodulator 438 verbunden, um den pneumatischen Hinterachsbremskreis 514 anzusteuern. Der Hinterachsmodulator 438 ist insbesondere ausgebildet, bei einer pneumatischen Druckbeaufschlagung über die pneumatische Hinterachsmodulator-Steuerleitung 494 einen Bremsdruck an die Betriebsbremskammern 444 auszusteuern. Insbesondere weisen der Vorderachsmodulator 434 und/oder der Hinterachsmodulator 438 zum Aussteuern eines Bremsdrucks ein Relaisventil auf.

Der Hauptanschluss 20 der Ausfallsicherheitsventileinheit 1 ist über die pneumatische Feststellbremsleitung 496 pneumatisch mit dem Feststellbrems-Modul 480 und dem pneumatischen Hinterachsbremskreis 522 des Feststellbremssystems 520 verbunden. Ein weiteres Auswahlventil 56 ist vorteilhaft in der pneumatischen Vorderachsmodulator-Steuerleitung 492 angeordnet zum pneumatischen Verbinden des Ausfallbremsanschluss 22 mit einem Steuereingang des Vorderachsmodulators 434.

Das Ausfallbremsventil 40 ist über eine Steuerleitung 412 mit der Steuereinheit 410 signal- und energieführend verbunden. Das Fahrzeug 200 kann eine weitere Druckregeleinrichtung 489, hier in Form eines Anhängersteuermoduls 490 zur pneumatischen Versorgung eines hier nicht dargestellten Anhängers des Fahrzeugs 200, aufweisen.

Bei einem Schalten des mindestens einen Ausfallbremsventils 40, 60 in ihre erste Stellung 40A, 60A werden die Federspeicherbremszylinder 442 entlüftet zum Auslösen einer Federspeicher-Ausfallbremsung BAF des Fahrzeugs 200. Hierzu ist schematisch die über den Vorderachsmodulator 434 bereitgestellte Betriebsbrems-Entlüftungsfunktion FBE durch Darstellung eines gestrichelten Entlüftungspfades 740 verdeutlicht. Dieser wird vorliegend durch ein Vorsteuer-Entlüftungsventil 722 als Auslassventil 458 realisiert. In anderen Ausführungsformen kann alternativ oder zusätzlich die bereitgestellte Betriebsbrems-Entlüftungsfunktion FBE durch ein weiteres Auslassventil 459, insbesondere durch ein ABS-Ventil 463, erfolgen, wie hier beispielhaft gezeigt mit einem weiteren Entlüftungspfad 740'.

Weiter gelangt bevorzugt bei einem Bereitstellen eines Betriebsbrems-Ausfallbremsdrucks pN am Ausfallbremsanschluss 22 der Betriebsbrems-Ausfallbremsdrucks pN an den Vorderachsmodulator 434, wodurch der Vorderachsmodulator 434 zwei, jeweils der Vorderachse 210 zugeordnete Betriebsbremszylinder 440 pneumatisch aktuiert. Die Betriebsbremszylinder 440 werden somit durch Beaufschlagung des Vorderachsmodulators 434 mit dem Betriebsbrems-Ausfallbremsdruck pN aktuiert, wodurch eine Betriebsbrems-Ausfallbremsung BAB der Vorderachse 210 und somit des Fahrzeugs 200 erreicht wird. Die Ausfallsicherheitsventileinheit 1 ist in einem separaten Ansteuerzweig 430 des elektropneumatischen Bremssystems 204 angeordnet, der unabhängig zu der regulären Ansteuerung der Betriebsbremszylinder 440, insbesondere über einen Bremswertgeber 436, bereitgestellt wird. Gleichwohl ist im Rahmen der Erfindung auch eine Bereitstellung eines Betriebsbrems-Ausfallbremsdrucks pN direkt an mindestens einen Betriebsbremszylinder 440, oder für einen anderen Bremszylinder, beispielsweise an die Betriebsbremskammer 444 der den Hinterrädern 222 zugeordneten Feststellbremszylinder 442, möglich. Insbesondere ist der Druckvorrat 454, der das Feststell-Bremsmodul 480 versorgt, separat von einem weiteren Druckvorrat 452, der im Normalbetrieb Druckluft für die Betriebsbremszylinder 440 vorhält, um die Unabhängigkeit der Ausfallsicherheitsventileinheit 1 zu erhöhen, und auf diese Weise vorteilhaft eine redundante Ausfallbrems-Funktionalität bereitzustellen.

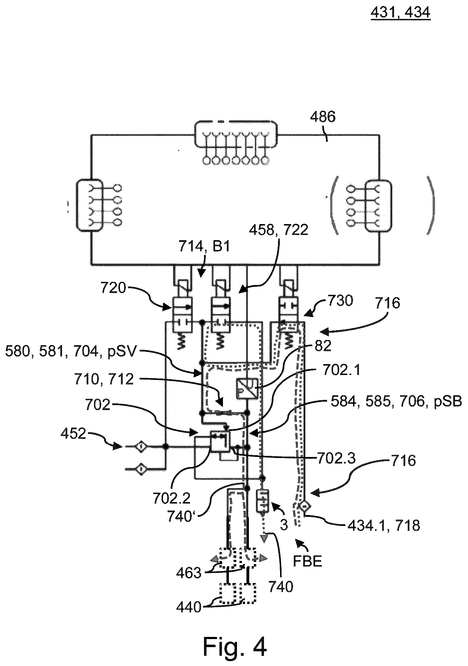

Fig. 4 zeigt ein pneumatisches Schaltbild eines Achsmodulators 431, insbesondere eines Vorderachsmodulators 434. Der Achsmodulator 431 weist einen Vorsteuerkreis 580 in Form eines Achsmodulator-Vorsteuerkreises 581, und einen Hauptkreis 584 in Form eines Achsmodulator-Hauptkreises 585 auf. Der Achsmodulator 431 weist ein Relaisventil 702 auf, welches über eine Steuerleitung 704 und einen Ventilsteueranschluss 702.1 des Achsmodulator-Vorsteuerkreises 581 mit einem Betriebsvorsteuerdruck pSV beaufschlagt werden kann, um an einem Arbeitsanschluss 702.3 des Achsmodulator-Hauptkreises 585 einen Betriebsbremsdruck pSB auszusteuern. Dem Relaisventil 702 wird über einen Vorratsanschluss 702.2 Druckluft bereitgestellt, insbesondere von einem weiteren Druckvorrat 452. Der Arbeitsanschluss 702.3 ist insbesondere pneumatisch über eine Arbeitsleitung 706 mit den Betriebsbremszylindern 440 der Vorderachse 210 verbunden. Die Steuerleitung 704 weist einen elektrischen Ansteuerzweig 714 mit einem Vorsteuer-Belüftungsventil 720 und einem Vorsteuer-Entlüftungsventil 722 auf, der ausgebildet ist, den Ventilsteueranschluss 702.1 zu belüften und/oder zu entlüften. Der elektrische Ansteuerzweig 714 mit dem Vorsteuer-Belüftungsventil 720 und dem Vorsteuer-Entlüftungsventil 722 ist insbesondere durch die Steuereinheit 410 und/oder das Primärsystem B1 steuerbar, insbesondere über die Vorderachsmodulator-Steuerleitung 486. Der Achsmodulator-Vorsteuerkreis 581 weist einen pneumatischen Ansteuerzweig 716 auf mit einem Backupventil 730. Der Ventilsteueranschluss 702.1 ist pneumatisch über den pneumatischen Ansteuerzweig 716 mit einem Steueranschluss 434.1 verbunden. Der Steueranschluss 434.1 ist insbesondere als Redundanzanschluss 718 des Vorderachsmodulators 434 ausgebildet. Das Backupventil 730 ist insbesondere als 2/2-Wegeventil und monostabil normal öffnend ausgebildet, um im Falle eines Fehlerfalls FF bei ausbleibender Ansteuerung zu öffnen, und eine pneumatische Ansteuerung über den pneumatischen Ansteuerzweig 716 zu ermöglichen. Das Vorsteuer-Belüftungsventil 720 und das Vorsteuer-Entlüftungsventil 722 des elektrischen Ansteuerzweigs 714 sind insbesondere entsprechend als 2/2-Wegeventil und monostabil normal schließend ausgebildet. Der Achsmodulator 431 weist einen Achsmodulator-Drucksensor 82 auf, der hier in der Arbeitsleitung 706 zum Messen des Betriebsbremsdrucks pSB angeordnet ist.

Vorliegend weist der Vorderachsmodulator 434 eine optionale Drossel 710, insbesondere eine Abdüsungsbohrung 712 auf, welche die Arbeitsleitung 706 pneumatisch mit der Steuerleitung 704 verbindet. Die Drossel 710 weist eine gegenüber der Steuerleitung 704 und/oder der Arbeitsleitung 706 reduzierte Nennweite auf.

Die Drossel 710 ist insbesondere in einem Relaiskolben des Relaisventils 702 angeordnet, insbesondere als Abdüsungsbohrung 712 in dem Relaiskolben.

In bevorzugten Ausführungsformen ist der pneumatische Ansteuerzweig 716, insbesondere über den Steueranschluss 434.1 bzw. den Redundanzanschluss 718, mit dem Ausfallbremsanschluss 22 der Ausfallsicherheitsventileinheit 1 pneumatisch verbunden. In derartigen Ausführungsformen kann das Vorsteuer-Entlüftungsventil 722 als Auslassventil 458 ausgebildet sein für die Betriebsbrems-Entlüftungsfunktion FBE. Durch das Öffnen des Vorsteuer-Entlüftungsventils 722 wird ein Entlüftungspfad 740 geöffnet, über den der Federspeicher-Belüftungsdruck pFS des mindestens einen Federspeicherbremszylinders 422 somit über den Vorsteuerkreis des Achsmodulator 431 zu einem Entlüftungsanschluss 3 entlüftet werden kann. Der Entlüftungspfad 740 ist hier gepunktet dargestellt.

In bevorzugten Ausführungsformen kann die Entlüftung alternativ oder zusätzlich zu dem gezeigten Entlüftungspfad 740 über ein ABS-Ventil 463 erfolgen, wie hier gestrichelt als weiterer Entlüftungspfad 740` gezeigt. Besonders bevorzugt führt der weitere Entlüftungspfad 740` wie hier gezeigt über die Drossel 710.

Die hier für den Vorderachsmodulator 434 gemachten Angaben können in anderen Ausführungsformen der Erfindung in gleicher Weise für einen anderen Achsmodulator 431, beispielsweise einen Hinterachsmodulator 438 zutreffen.

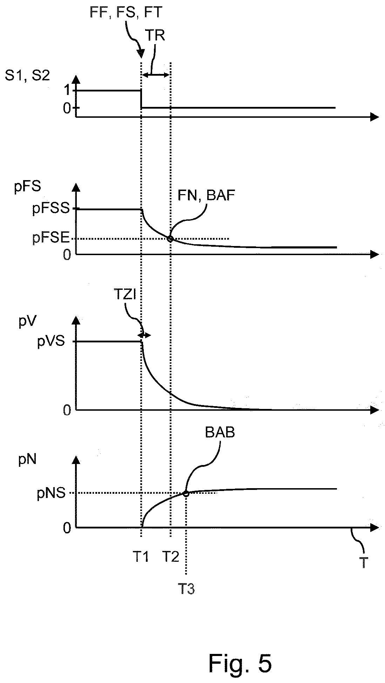

In Fig. 5 sind schematisch Verläufe des Steuersignals S1, des optionalen weiteren Steuersignals S2, sowie des Federspeicher-Belüftungsdrucks pFS, eines Vorratsdrucks pV und eines optionalen Betriebsbremsdrucks pSB bzw. Ausfallbremsdrucks pN dargestellt.

Zu einem ersten Zeitpunkt T1 wird das Steuersignal S1, in optionalen Ausführungsformen zusätzlich auch das weitere Steuersignal S2, unterbrochen oder fällt weg oder wird auf Null gesetzt. Dies ist insbesondere durch einen Fehlerfall FF und/oder einen Stromausfall FS und/oder einen Diagnosefall FT der Steuereinheit 410, 420 bedingt.

Als Konsequenz schaltet das mindestens eine Ausfallbremsventil 40, 60 der Ausfallsicherheitsventileinheit 1 in eine erste Stellung 40A, 60A, wodurch mindestens ein Federspeicherbremszylinder 442 über die Ausfallsicherheitsventileinheit 1 entlüftet wird. Folglich beginnt der Federspeicher-Belüftungsdruck pFS ab dem ersten Zeitpunkt T1, von einem Soll-Belüftungsdruck pFSS abzufallen. Wenn der abfallende Federspeicher-Belüftungsdruck pFS einen Einfall-Belüftungsdruck pFSE erreicht hat, erfolgt ein Einfallen des mindestens einen Federspeicherbremszylinders 442, wodurch eine Ausfallbremsfunktion FN in Form einer Federspeicher-Ausfallbremsung BAF ausgelöst wird. Das Fahrzeug 200 kommt zu einem sicheren Halt.

Optional können vorteilhaft Maßnahmen zum Unterbrechen der Druckversorgung 600 vorgesehen werden, insbesondere zum Absenken des Vorratsdrucks. Dies ist hier beispielhaft mit dem Verlauf eines Vorratsdrucks PV gezeigt, der zum ersten Zeitpunkt T1, oder in einem Toleranz-Zeitintervall TZI vor und/oder nach dem ersten Zeitpunkt T1 abgesenkt wird, beispielsweise durch das Öffnen eines Auslassventils und/oder eines weiteren Auslassventils. Zusätzlich dazu kann ein Abschalten eines Verdichters 602 der Druckversorgung 600 erfolgen, um ein Wiederansteigen des Vorratsdrucks pV zu verhindern. Das Abschalten des Verdichter 602 kann auch mittelbar, insbesondere durch ein Absperren der Zuführleitung 468, erfolgen.

Schließlich ist mit dem Verlauf eines Betriebsbrems-Ausfallbremsdrucks pN die optionale Möglichkeit einer Betriebs-Ausfallbremsung BAB gezeigt, die durch ein Bereitstellen des Federspeicher-Belüftungsdrucks pFS in Form des Betriebsbrems-Ausfallbremsdrucks pN ausgelöst wird. Mit der einsetzenden Entlüftung des mindestens einen Federspeicherbremszylinders 422 ab dem ersten Zeitpunkt T1 baut sich am Ausfallbremsanschluss 22 der Betriebsbrems-Ausfallbremsdrucks pN auf, der bei Erreichen eines Ausfallbremsdruck-Schwellwerts pNS, hier zu einem dritten Zeitpunkt T3, zu einer Betriebs-Ausfallbremsung BAB führt.

### Liste der Bezugszeichen (Teil der Beschreibung)

- 1, 1': Ausfallsicherheitsventileinheit
- 3: Entlüftungsanschluss
- 20: Hauptanschluss
- 22: Ausfallbremsanschluss
- 30: Ventilhauptleitung
- 34: Druckbegrenzungsventil
- 40: erstes Ausfallbremsventil
- 40.1: erster Ventilanschluss des ersten Ausfallbremsventils
- 40.2: zweiter Ventilanschluss des ersten Ausfallbremsventils
- 40.3: Entlüftungsanschluss des ersten Ausfallbremsventils
- 40.4: Magnetteil des ersten Ausfallbremsventils
- 40A: erste Stellung des ersten Ausfallbremsventils
- 40B: zweite Stellung des ersten Ausfallbremsventils
- 41: Rückstellfeder des ersten Ausfallbremsventils
- 50: Auswahlventil
- 50.1: erster Auswahlventilanschluss
- 50.2: zweiter Auswahlventilanschluss
- 50.3: dritter Auswahlventilanschluss
- 52: Wechselventil
- 56: weiteres Auswahlventil
- 60: zweites Ausfallbremsventil, weiteres Ausfallbremsventil
- 60.1: erster Ventilanschluss des zweiten Ausfallbremsventils
- 60.2: zweiter Ventilanschluss des zweiten Ausfallbremsventils
- 60.3: Entlüftungsanschluss des zweiten Ausfallbremsventils
- 60A: erste Stellung des zweiten Ausfallbremsventils, weitere erste Stellung
- 60B: zweite Stellung des zweiten Ausfallbremsventils, weitere zweite Stellung
- 61: Rückstellfeder des zweiten Ausfallbremsventils
- 62: 2/2-Wegeventil
- 64: 2/2-Wege-Magnetventil
- 66: 3/2-Wegeventil
- 68: 3/2-Wege-Magnetventil
- 70: Bistabilventileinheit
- 72: Bistabilventil
- 72.1: erster Bistabilventilanschluss
- 72.2: zweiter Bistabilventilanschluss
- 72A: erste Stellung des Bistabilventils
- 72B: zweite Stellung des Bistabilventils
- 80: Ausfall-Relaisventil
- 80.1: erster Ausfall-Steueranschluss
- 80.2: zweiter Ausfall-Vorratsanschluss
- 80.3: dritter Ausfall-Arbeitsanschluss
- 80.4: Ausfall-Entlüftungsanschluss
- 82: Achsmodulator-Drucksensor
- 84: Drucksensor
- 200: Fahrzeug
- 202: Nutzfahrzeug
- 204: elektropneumatisches Bremssystem
- 210: Vorderachse
- 212: Vorderrad
- 220: Hinterachse
- 222: Hinterrad
- 410: elektronische Steuereinheit, erste elektronische Steuereinheit
- 412: erste Steuerleitung
- 414: erste Versorgungsleitung
- 416: erste Energieversorgung
- 418: externe Steuereinheit
- 420: zweite elektronische Steuereinheit, weitere elektronische Steuereinheit
- 422: zweite Steuerleitung
- 424: zweite Versorgungsleitung
- 426: zweite Energieversorgung
- 430: separater Ansteuerzweig
- 431: Achsmodulator
- 432: Vorderachs-Wechselventil
- 433: Vorderachs-Wechselventil
- 434: Vorderachsmodulator
- 434.1: Steueranschluss des Vorderachsmodulators
- 436: Bremswertgeber
- 438: Hinterachsmodulator
- 440: Betriebsbremszylinder
- 442: Federspeicherbremszylinder
- 444: Betriebsbremskammer
- 446: Feststellbremskammer
- 448: Vorratsleitung
- 450: noch weiterer Druckvorrat
- 452: weiterer Druckvorrat
- 454: Druckvorrat
- 458: Auslassventil
- 459: weiteres Auslassventil
- 460: Fahrzeugbus-Leitung
- 461: weitere Fahrzeugbus-Leitung
- 462: Fahrzeugbus
- 463: ABS-Ventil
- 464: Einheit für autonomes Fahren
- 468: Zufuhrleitung
- 470: Steuerverbindung
- 480: Feststellbrems-Modul
- 482: Feststellbrems-Bedienelement
- 484: Bremswertgeber-Steuerleitung
- 486: Vorderachsmodulator-Steuerleitung
- 488: Hinterachsmodulator-Steuerleitung
- 489: Druckregeleinrichtung
- 490: Anhängersteuermodul
- 492: Vorderachsmodulator-Steuerleitung
- 494: Hinterachsmodulator-Steuerleitung
- 496: Feststellbremsleitung
- 510: Betriebsbremssystem
- 512: Vorderachskreis des Betriebsbremssystems
- 514: Hinterachskreis des Betriebsbremssystems
- 516: Redundanzkreis
- 520: Feststellbremssystem
- 522: Hinterachskreis des Feststellbremssystems
- 580: Vorsteuerkreis des Betriebsbremssystems
- 581: Achsmodulator-Vorsteuerkreis
- 584: Hauptkreis des Betriebsbremssystems
- 585: Achsmodulator-Hauptkreis
- 600: Druckversorgung
- 602: Verdichter
- 702: Relaisventil
- 702.1: Ventilsteueranschluss des Relaisventils
- 702.2: Vorratsanschluss des Relaisventils
- 702.3: Arbeitsanschluss des Relaisventils
- 704: Steuerleitung
- 706: Arbeitsleitung
- 710: Drossel
- 712: Abdüsungsbohrung
- 714: elektrischer Ansteuerzweig
- 716: pneumatischer Ansteuerzweig
- 718: Redundanzanschluss
- 720: Vorsteuer-Belüftungsventil
- 722: Vorsteuer-Entlüftungsventil
- 730: Backupventil
- 740: Entlüftungspfad
- AB: Bremsanforderung
- AD: Diagnoseablauf
- BA: Ausfallbremsung
- BAB: Betriebsbrems-Ausfallbremsung
- BAF: Federspeicher-Ausfallbremsung
- BB: Betriebsbremsung
- FA: Ausnahmefehler
- FBE: Betriebsbrems-Entlüftungsfunktion
- FD: Doppelfehler
- FF: Fehlerfall
- FFS: Feststellbremsfunktion
- FN: Ausfallbremsfunktion
- FS: Stromausfall
- FT: Diagnosefall
- pFS: Federspeicher-Belüftungsdruck
- pFS': vom Federspeicher-Belüftungsdruck abgeleiteter Druck
- pFSE: Einfall-Belüftungsdruck
- pFSS: Soll-Belüftungsdruck
- pN: Betriebsbrems-Ausfallbremsdruck
- pNS: Ausfallbremsdruck-Schwellwert
- pSB: Betriebsbremsdruck
- pSV: Betriebsvorsteuerdruck
- pV: Vorratsdruck
- S1: Steuersignal, erstes Steuersignal
- S2: weiteres Steuersignal, zweites Steuersignal
- S3: noch weiteres Steuersignal, drittes Steuersignal
- SR: Strömungsrichtung
- TZI: Toleranz-Zeitintervall

## Patentansprüche

1. Verfahren zum Betreiben eines elektropneumatischen Bremssystems (204) für ein Fahrzeug (200), vorzugsweise ein Nutzfahrzeug (202), wobei das Bremssystem (204) ein Betriebsbremssystem (510) und ein Feststellbremssystem (520) umfasst, wobei
das Feststellbremssystem (520) mindestens einen Federspeicherbremszylinder (442) umfasst,
**gekennzeichnet durch** die Schritte:
Bereitstellen eines Steuersignals (S1, S2) zum Halten eines, den mindestens einen Federspeicherbremszylinder (442) belüftenden Federspeicher-Belüftungsdrucks (pFS) durch eine Steuereinheit (410, 420),
Unterbrechen des Bereitstellens des Steuersignals (S1, S2) in einem Fehlerfall (FF) und/oder einem Stromausfall (FS) und/oder einem Diagnosefall (FT) der Steuereinheit (410, 420), dadurch
selbsttätiges Beenden des Haltens des Federspeicher-Belüftungsdrucks (pFS) zum Entlüften des mindestens einen Federspeicherbremszylinders (442), dadurch
Auslösen einer Federspeicher-Ausfallbremsung (BAF) des Fahrzeugs (200) durch das Feststellbremssystem (520), wobei
das Entlüften des Federspeicher-Belüftungsdrucks (pFS) durch eine Betriebsbrems-Entlüftungsfunktion (FBE) des Betriebsbremssystems (510) erfolgt.

2. Verfahren nach Anspruch 1, **dadurch gekennzeichnet, dass**
der Federspeicher-Belüftungsdruck (pFS) beim Entlüften durch die Betriebsbrems-Entlüftungsfunktion (FBE) zusätzlich als Betriebsbrems-Ausfallbremsdruck (pN) zum Auslösen einer Betriebsbrems-Ausfallbremsung (BAB) wirksam ist.

3. Verfahren nach Anspruch 2, **dadurch gekennzeichnet, dass**
der Betriebsbrems-Ausfallbremsdruck (pN) über den Ausfallbremsanschluss (22) an mindestens einen Betriebsbremszylinder (440) und/oder eine Betriebsbremskammer (444) und/oder einen Achsmodulator (434, 438) und/oder eine weitere pneumatische Bremskomponente (462) bereitgestellt wird.

4. Verfahren nach Anspruch 2 oder 3, **dadurch gekennzeichnet, dass**
nach dem Bereitstellen des Betriebsbrems-Ausfallbremsdrucks (pN) ein Einsperren des Betriebsbrems-Ausfallbremsdrucks (pN), bevorzugt in dem mindestens einen Betriebsbremszylinder (440) und/oder der Betriebsbremskammer (444) und/oder dem Achsmodulator (434, 438) und/oder der weiteren pneumatischen Bremskomponente (462), erfolgt.

5. Verfahren nach einem der vorherigen Ansprüche, **dadurch gekennzeichnet, dass**
die Betriebsbrems-Entlüftungsfunktion (FBE) das Öffnen eines Auslassventils (458) des Betriebsbremssystems (510) umfasst.

6. Verfahren nach Anspruch 5, **dadurch gekennzeichnet, dass**
das Auslassventil (458) in einem einen Betriebsvorsteuerdruck (pSV) führenden Vorsteuerkreis (580) des Betriebsbremssystems (510) angeordnet ist, bevorzugt ein Vorsteuer-Entlüftungsventil (722) eines Achsmodulators (431, 434, 438) ist.

7. Verfahren nach einem der vorherigen Ansprüche, **dadurch gekennzeichnet, dass**
die Betriebsbrems-Entlüftungsfunktion (FBE) das Öffnen eines weiteren Auslassventils (459) umfasst.

8. Verfahren nach Anspruch 7, **dadurch gekennzeichnet, dass**
das weitere Auslassventil (459) in einem einen Betriebsbremsdruck (pSB) führenden Hauptkreis (584) des Betriebsbremssystems (510) angeordnet ist, bevorzugt ein Hauptventil (460) eines Achsmodulators (431, 434, 438) oder ein ABS-Ventil (463) ist.

9. Verfahren nach einem der vorherigen Ansprüche, **dadurch gekennzeichnet, dass**
bei dem Entlüften des Federspeicher-Belüftungsdrucks (pFS) eine das Feststellbremssystem (520) versorgende Druckversorgung (600) unterbrochen wird, bevorzugt durch ein Abschalten eines Verdichters (602) und/oder durch ein Absperren einer Zufuhrleitung (468).

10. Verfahren nach Anspruch 9, **dadurch gekennzeichnet, dass**
das Unterbrechen der Druckversorgung (600) durch ein Absenken des Vorratsdrucks (pV), bevorzugt durch ein Entleeren des Druckvorrats (454), erfolgt, wobei
zum Entleeren des Druckvorrats (450, 452, 454) das Auslassventil (458) und/oder das weitere Auslassventil (459) geöffnet wird.

11. Verfahren nach Anspruch 10, **dadurch gekennzeichnet, dass**
das weitere Auslassventil (459) in einem anderen Bremskreis (512, 514) des Betriebsbremssystems (510) angeordnet ist als ein die Betriebsbrems-Ausfallbremsung (BAB) auslösende und/oder die Federspeicher-Ausfallbremsung (BAF) haltender Bremskreis (512, 514) des Betriebsbremssystems (510).

12. Ausfallsicherheitsventileinheit (1) für eine Ausfallbremsfunktion (FN) eines elektropneumatischen Bremssystems (204) für ein Fahrzeug (200), vorzugsweise ein Nutzfahrzeug (202), wobei das elektropneumatische Bremssystem (204) ein Betriebsbremssystem (510) und ein Feststellbremssystem (520) mit mindestens einem Federspeicherbremszylinder (442) umfasst, und wobei die Ausfallsicherheitsventileinheit (1) aufweist:
eine Ventilhauptleitung (30), die einen Hauptanschluss (20) und einen Ausfallbremsanschluss (22) pneumatisch verbindet,
mindestens ein als monostabiles Ventil ausgebildetes Ausfallbremsventil (40, 60), das in der Ventilhauptleitung (30) angeordnet ist,
**dadurch gekennzeichnet, dass**
der Ausfallbremsanschluss (22) mit einem einen Betriebsbremsdruck (pSB) führenden Hauptkreis (584) des Betriebsbremssystems (510) verbindbar oder verbunden ist,
der Hauptanschluss (20) mit dem mindestens einen Federspeicherbremszylinder (442) pneumatisch verbindbar oder verbunden ist,
das mindestens eine Ausfallbremsventil (40, 60) in einem nicht angesteuerten Zustand in einer ersten Stellung (40A, 60A) geöffnet ist derart, dass
ein Entlüften eines am mindestens einen Federspeicherbremszylinder (442) anliegenden Federspeicher-Belüftungsdrucks (pFS) durch eine Betriebsbrems-Entlüftungsfunktion (FBE) des Betriebsbremssystems (510) über dem Ausfallbremsanschluss (22) erfolgt zum Auslösen einer Federspeicher-Ausfallbremsung (BAF) des Fahrzeugs (200) durch das Feststellbremssystem (520).

13. Ausfallsicherheitsventileinheit (1) nach Anspruch 12, **dadurch gekennzeichnet, dass**
- das mindestens eine Ausfallbremsventil (40, 60) von mindestens einer Steuereinheit (410, 420) ansteuerbar ist, derart dass
- in einem Fehlerfall (FF) und/oder Stromausfall (SF) und/oder Diagnosefall (FT) der mindestens einen Steuereinheit (410, 420) über das Entlüften eines am mindestens einen Federspeicherbremszylinder (442) anliegenden Federspeicher-Belüftungsdrucks (pFS) und/oder das Bereitstellen eines Betriebsbrems-Ausfallbremsdrucks (pN) am Ausfallbremsanschluss (22) durch das Bremssystem (204) eine Ausfallbremsung (BA) des Fahrzeugs (200) ausgelöst wird.

14. Ausfallsicherheitsventileinheit (1) nach einem der Ansprüche 12 oder 13, **dadurch gekennzeichnet, dass**
- die Ausfallsicherheitsventileinheit (1) ein erstes als monostabiles Ventil ausgebildetes Ausfallbremsventil (40) und ein zweites als monostabiles Ventil ausgebildetes Ausfallbremsventil (60) aufweist, wobei
- das erste Ausfallbremsventil (40) und das zweite Ausfallbremsventil (60) in der Ventilhauptleitung (30) pneumatisch in Reihe geschaltet sind, und
- das erste Ausfallbremsventil (40) von der ersten Steuereinheit (410) steuerbar ist und das zweite Ausfallbremsventil (60) von der zweiten Steuereinheit (420) steuerbar ist.

15. Elektropneumatisches Bremssystem (204) für ein Fahrzeug (200), insbesondere ein Nutzfahrzeug (202), umfassend ein Betriebsbremssystem (510) und ein Feststellbremssystem (520), und eine Steuereinheit (410, 420), ausgebildet zum Durchführen eines Verfahrens der Ansprüche 1 bis 11.

16. Elektropneumatisches Bremssystem (204) nach Anspruch 15, **gekennzeichnet durch**
eine Ausfallsicherheitsventileinheit (1) gemäß einem der Ansprüche 12 bis 14, wobei
die Ausfallsicherheitsventileinheit (1) in einem separaten Ansteuerzweig (430) angeordnet ist.

17. Elektropneumatisches Bremssystem (204) nach Anspruch 15 oder 16, **dadurch gekennzeichnet, dass**
- das Bremssystem (204) eine erste Steuereinheit (410) und eine zweite Steuereinheit (420) aufweist, die unabhängig voneinander mit Energie versorgt werden und/oder sich wenigstens teilweise gegenseitig in ihrer Funktion ersetzen können.

18. Elektropneumatisches Bremssystem (204) nach einem der Ansprüche 15 bis 17, **dadurch gekennzeichnet, dass**
eine Betriebsbrems-Luftmenge (mN), die von der Betriebsbrems-Entlüftungsfunktion (FBE) aufgenommen oder entlüftet werden kann, größer oder gleich einer Federspeicherbremsdruck-Luftmenge (mF) ist, die von mindestens einem Federspeicherbremszylinder (442), insbesondere von sämtlichen Federspeicherbremszylindern (442) des Feststellbremssystems (520), aufgenommen werden kann, derart dass
das Entlüften des Federspeicher-Belüftungsdrucks (pFS) durch die Betriebsbrems-Entlüftungsfunktion (FBE) eine vollständige Entlüftung des mindestens einen Federspeicherbremszylinders (442) zur Folge hat.

19. Elektropneumatisches Bremssystem (204) nach einem der Ansprüche 15 bis 18, **dadurch gekennzeichnet, dass**
das elektropneumatische Bremssystem (204), bevorzugt die Steuereinheit (410, 420) oder ein Fahrzeugbus (462) oder ein weiteres elektronisches Steuermittel (464), ausgebildet ist, bei dem Entlüften des Federspeicher-Belüftungsdrucks (pFS) durch eine Betriebsbrems-Entlüftungsfunktion (FBE) eine das Feststellbremssystem (520) versorgende Druckversorgung (600) zu unterbrechen, bevorzugt durch ein Abschalten eines Verdichters (602) und/oder durch ein Absperren einer Zufuhrleitung (468) und/oder durch ein Absenken des Vorratsdrucks (pV).

20. Fahrzeug (200), insbesondere Nutzfahrzeug (202), ausgebildet zum Durchführen eines Verfahrens nach einem der Ansprüche 1 bis 11 und/oder mit einer Ausfallsicherheitsventileinheit (1) nach einem der Ansprüche 12 bis 14 und/oder mit einem elektropneumatischen Bremssystem (204) nach Anspruch 15 bis 19.

## Claims

1. Method for operating an electropneumatic brake system (204) for a vehicle (200), preferably a commercial vehicle (202), the brake system (204) comprising a service brake system (510) and a parking brake system (520),
the parking brake system (520) comprising at least one spring brake actuator (442),
**characterized by** the following steps:
providing, by means of a control unit (410, 420), a control signal (S1, S2) for maintaining a spring-loaded ventilation pressure (pFS) that ventilates the at least one spring brake actuator (442),
interrupting the provision of the control signal (S1, S2) in the event of a fault (FF) and/or a power failure (FS) and/or a diagnostic case (FT) of the control unit (410, 420), thereby
automatically terminating the maintenance of the spring-loaded ventilation pressure (pFS) in order to bleed the at least one spring brake actuator (442), thereby
triggering spring-loaded fail-safe braking (BAF) of the vehicle (200) by the parking brake system (520),
the bleeding of the spring-loaded ventilation pressure (pFS) being carried out by a service brake bleed function (FBE) of the service brake system (510).

2. Method according to claim 1, **characterized in that**
the spring-loaded ventilation pressure (pFS) is also effective as a service brake fail-safe brake pressure (pN) for triggering a service brake fail-safe braking (BAB) when bleeding through the service brake bleed function (FBE).

3. Method according to claim 2, **characterized in that**
the service brake fail-safe brake pressure (pN) is provided via the fail-safe brake connection (22) to at least one service brake cylinder (440) and/or a service brake chamber (444) and/or an axle modulator (434, 438) and/or a further pneumatic brake component (462).

4. Method according to claim 2 or 3, **characterized in that**
after the service brake fail-safe brake pressure (pN) has been provided, the service brake fail-safe brake pressure (pN) is locked in, preferably in the at least one service brake cylinder (440) and/or the service brake chamber (444) and/or the axle modulator (434, 438) and/or the further pneumatic brake component (462).

5. Method according to any of the preceding claims, **characterized in that**
the service brake bleed function (FBE) comprises opening an outlet valve (458) of the service brake system (510).

6. Method according to claim 5, **characterized in that**
the outlet valve (458) is arranged in a pilot control circuit (580) of the service brake system (510) carrying an operating pilot control pressure (pSV), the outlet valve preferably being a pilot control bleed valve (722) of an axle modulator (431, 434, 438).

7. Method according to any of the preceding claims, **characterized in that**
the service brake bleed function (FBE) comprises opening a further outlet valve (459).

8. Method according to claim 7, **characterized in that**
the further outlet valve (459) is arranged in a main circuit (584) of the service brake system (510) carrying a service brake pressure (pSB), the further outlet valve preferably being a main valve (460) of an axle modulator (431, 434, 438) or an ABS valve (463).

9. Method according to any of the preceding claims, **characterized in that**
when the spring-loaded ventilation pressure (pFS) is bled, a pressure supply (600) supplying the parking brake system (520) is interrupted, preferably by a compressor (602) being switched off and/or by a supply line (468) being shut off.

10. Method according to claim 9, **characterized in that**
the interruption of the pressure supply (600) is carried out by the supply pressure (pV) being lowered, preferably by the pressure reservoir (454) being emptied,
the outlet valve (458) and/or the further outlet valve (459) being opened to empty the pressure reservoir (450, 452, 454).

11. Method according to claim 10, **characterized in that**
the further outlet valve (459) is arranged in a different brake circuit (512, 514) of the service brake system (510) than a brake circuit (512, 514) of the service brake system (510) which triggers the service brake fail-safe braking (BAB) and/or maintains the spring-loaded fail-safe braking (BAF).

12. Fail-safe valve unit (1) for a fail-safe braking function (FN) of an electropneumatic brake system (204) for a vehicle (200), preferably a commercial vehicle (202), the electropneumatic brake system (204) comprising a service brake system (510) and a parking brake system (520) having at least one spring brake actuator (442), and the fail-safe valve unit (1) comprising:
a valve main line (30) pneumatically connecting a main connection (20) and a fail-safe brake connection (22),
at least one fail-safe brake valve (40, 60) designed as a monostable valve, which is arranged in the valve main line (30),
**characterized in that**
the fail-safe brake connection (22) is connectable or connected to a main circuit (584) of the service brake system (510) carrying a service brake pressure (pSB),
the main connection (20) is pneumatically connectable or connected to the at least one spring brake actuator (442),
the at least one fail-safe brake valve (40, 60) is open in a non-activated state in a first position (40A, 60A) such that
bleeding of a spring-loaded ventilation pressure (pFS) applied to at least one spring brake actuator (442) by a service brake bleed function (FBE) of the service brake system (510) via the fail-safe brake connection (22) takes place in order to trigger a spring-loaded fail-safe braking (BAF) of the vehicle (200) by the parking brake system (520).

13. Fail-safe valve unit (1) according to claim 12, **characterized in that**
- the at least one fail-safe brake valve (40, 60) can be controlled by at least one control unit (410, 420) such that
- in the event of a fault (FF) and/or power failure (SF) and/or diagnostic case (FT) of the at least one control unit (410, 420), fail-safe braking (BA) of the vehicle (200) is triggered by the brake system (204) by a spring-loaded ventilation pressure (pFS) applied to at least one spring brake actuator (442) being bled and/or by a service brake fail-safe brake pressure (pN) being provided at the fail-safe brake connection (22).

14. Fail-safe valve unit (1) according to one of claims 12 or 13,
**characterized in that**
- the fail-safe valve unit (1) has a first fail-safe brake valve (40) designed as a monostable valve and a second fail-safe brake valve (60) designed as a monostable valve,
- the first fail-safe brake valve (40) and the second fail-safe brake valve (60) are pneumatically connected in series in the valve main line (30), and
- the first fail-safe brake valve (40) is controllable by the first control unit (410) and the second fail-safe brake valve (60) is controllable by the second control unit (420).

15. Electropneumatic brake system (204) for a vehicle (200), in particular a commercial vehicle (202), comprising a service brake system (510) and a parking brake system (520), and a control unit (410, 420) designed to carry out a method of claims 1 to 11.

16. Electropneumatic brake system (204) according to claim 15,
**characterized by**
a fail-safe valve unit (1) according to any of claims 12 to 14,
the fail-safe valve unit (1) being arranged in a separate actuation branch (430).

17. Electropneumatic brake system (204) according to claim 15 or 16,
**characterized in that**
- the brake system (204) has a first control unit (410) and a second control unit (420) which are supplied with energy independently of one another and/or can at least partially replace one another in their function.

18. Electropneumatic brake system (204) according to any of claims 15 to 17, **characterized in that**
a service brake air quantity (mN) that can be absorbed or bled by the service brake bleed function (FBE) is greater than or equal to a spring-loaded brake pressure air quantity (mF) that can be absorbed by at least one spring brake actuator (442), in particular by all spring brake actuators (442) of the parking brake system (520), such that
the bleeding of the spring-loaded ventilation pressure (pFS) by the service brake bleed function (FBE) results in complete bleeding of at least one spring brake actuator (442).

19. Electropneumatic brake system (204) according to any of claims 15 to 18, **characterized in that**
the electropneumatic brake system (204), preferably the control unit (410, 420) or a vehicle bus (462) or a further electronic control means (464), is designed to interrupt a pressure supply (600) supplying the parking brake system (520) when the spring-loaded ventilation pressure (pFS) is bled by a service brake bleed function (FBE), preferably by switching off a compressor (602) and/or by shutting off a supply line (468) and/or by lowering the supply pressure (pV).

20. Vehicle (200), in particular a commercial vehicle (202), designed to carry out a method according to any of claims 1 to 11 and/or comprising a fail-safe valve unit (1) according to any of claims 12 to 14 and/or comprising an electropneumatic brake system (204) according to claims 15 to 19.

## Revendications

1. Procédé permettant de faire fonctionner un système de freinage électropneumatique (204) pour un véhicule (200), de préférence un véhicule utilitaire (202), dans lequel le système de freinage (204) comprend un système de frein de service (510) et un système de frein de stationnement (520), dans lequel
le système de frein de stationnement (520) comprend au moins un cylindre de frein à ressort (442),
**caractérisé par** les étapes consistant à :
fournir un signal de commande (S1, S2) pour maintenir une pression de ventilation d'accumulateur à ressort (pFS), qui ventile l'au moins un cylindre de frein à ressort (442), au moyen d'une unité de commande (410, 420),
interrompre la fourniture du signal de commande (S1, S2) en cas de défaut (FF) et/ou en cas de panne de courant (FS) et/ou en cas de diagnostic (FT) de l'unité de commande (410, 420), ce qui permet
l'arrêt automatique du maintien de la pression de ventilation d'accumulateur à ressort (pFS) permettant de ventiler l'au moins un cylindre de frein à ressort (442) et ainsi de
déclencher un freinage en cas de défaillance d'accumulateur à ressort (BAF) du véhicule (200) au moyen du système de frein de stationnement (520), dans lequel
la ventilation de la pression de ventilation d'accumulateur à ressort (pFS) est effectuée par une fonction de ventilation de frein de service (FBE) du système de frein de service (510).

2. Procédé selon la revendication 1, **caractérisé en ce que**
la pression de ventilation d'accumulateur à ressort (pFS) est active lors de la ventilation par la fonction de ventilation de frein de service (FBE) en supplément comme pression de freinage en cas de défaillance de frein de service (pN) permettant de déclencher un freinage en cas de défaillance de frein de service (BAB).

3. Procédé selon la revendication 2, **caractérisé en ce que**
la pression de freinage en cas de défaillance de frein de service (pN) est fournie par l'intermédiaire du raccord de freinage en cas de défaillance (22) à au moins un cylindre de frein de service (440) et/ou une chambre de frein de service (444) et/ou un modulateur d'essieu (434, 438) et/ou un autre composant de freinage pneumatique (462).

4. Procédé selon la revendication 2 ou 3, **caractérisé en ce que,**
après la fourniture de la pression de freinage en cas de défaillance de frein de service (pN), un blocage de la pression de freinage en cas de défaillance de frein de service (pN) est effectué, de préférence dans l'au moins un cylindre de frein de service (440) et/ou la chambre de frein de service (444) et/ou le modulateur d'essieu (434, 438) et/ou l'autre composant de freinage pneumatique (462).

5. Procédé selon l'une des revendications précédentes, **caractérisé en ce que**
la fonction de ventilation de frein de service (FBE) comprend l'ouverture d'une soupape d'échappement (458) du système de frein de service (510).

6. Procédé selon la revendication 5, **caractérisé en ce que**
la soupape d'échappement (458) est disposée dans un circuit de commande pilote (580) du système de frein de service (510), lequel circuit de commande pilote conduit une pression de commande pilote de service (pSV), la soupape d'échappement étant de préférence une soupape de ventilation de commande pilote (722) d'un modulateur d'essieu (431, 434, 438).

7. Procédé selon l'une des revendications précédentes, **caractérisé en ce que**
la fonction de ventilation de frein de service (FBE) comprend l'ouverture d'une autre soupape d'échappement (459).

8. Procédé selon la revendication 7, **caractérisé en ce que**
l'autre soupape d'échappement (459) est disposée dans un circuit principal (584) du système de frein de service (510), lequel circuit principal conduit une pression de frein de service (pSB), l'autre soupape d'échappement étant de préférence une soupape principale (460) d'un modulateur d'essieu (431, 434, 438) ou une soupape ABS (463).

9. Procédé selon l'une des revendications précédentes, **caractérisé en ce que**
lors de la ventilation de la pression de ventilation d'accumulateur à ressort (pFS), une alimentation en pression (600) alimentant le système de frein de stationnement (520) est interrompue, de préférence par un arrêt d'un compresseur (602) et/ou par une fermeture d'une conduite d'alimentation (468).

10. Procédé selon la revendication 9, **caractérisé en ce que**
l'interruption de l'alimentation en pression (600) s'effectue par un abaissement de la pression de réserve (pV), de préférence par un vidage de la réserve de pression (454), dans lequel
la soupape d'échappement (458) et/ou l'autre soupape d'échappement (459) est ouverte pour le vidage de la réserve de pression (450, 452, 454).

11. Procédé selon la revendication 10, **caractérisé en ce que**
l'autre soupape d'échappement (459) est disposée dans un circuit de freinage (512, 514) du système de frein de service (510) différent d'un circuit de freinage (512, 514), du système de frein de service (510), déclenchant le freinage en cas de défaillance de frein de service (BAB) et/ou maintenant le freinage en cas de défaillance d'accumulateur à ressort (BAF).

12. Unité de soupapes de sécurité en cas de défaillance (1) pour une fonction de freinage en cas de défaillance (FN) d'un système de freinage électropneumatique (204) pour un véhicule (200), de préférence un véhicule utilitaire (202), dans laquelle le système de freinage électropneumatique (204) comprend un système de frein de service (510) et un système de frein de stationnement (520) comportant au moins un cylindre de frein à ressort (442), et dans laquelle l'unité de soupapes de sécurité en cas de défaillance (1) présente
une conduite principale de soupape (30) qui relie pneumatiquement un raccord principal (20) et un raccord de freinage en cas de défaillance (22),
au moins une soupape de freinage en cas de défaillance (40, 60) conçue comme une soupape monostable et disposée dans la conduite principale de soupape (30),
**caractérisée en ce que**
le raccord de freinage en cas de défaillance (22) peut être raccordé ou est raccordé à un circuit principal (584) du système de frein de service (510) conduisant une pression de frein de service (pSB),
le raccord principal (20) peut être relié ou est relié pneumatiquement à l'au moins un cylindre de frein à ressort (442),
l'au moins une soupape de freinage en cas de défaillance (40, 60) est ouverte dans un état non commandé dans une première position (40A, 60A), de telle sorte
qu'une ventilation d'une pression de ventilation d'accumulateur à ressort (pFS) appliquée à l'au moins un cylindre de frein à ressort (442) est effectuée par une fonction de ventilation de frein de service (FBE) du système de frein de service (510) par l'intermédiaire du raccord de freinage en cas de défaillance (22) pour déclencher un freinage en cas de défaillance d'accumulateur à ressort (BAF) du véhicule (200) au moyen du système de frein de stationnement (520).

13. Unité de soupapes de sécurité en cas de défaillance (1) selon la revendication 12, **caractérisée en ce que**
- l'au moins une soupape de freinage en cas de défaillance (40, 60) peut être commandée par au moins une unité de commande (410, 420), de telle sorte
- qu'en cas de défaut (FF) et/ou en cas de panne de courant (SF) et/ou en cas de diagnostic (FT) de l'au moins une unité de commande (410, 420), un freinage en cas de défaillance (BA) du véhicule (200) est déclenché au moyen du système de freinage (204) par l'intermédiaire de la ventilation d'une pression de ventilation d'accumulateur à ressort (pFS) appliquée à l'au moins un cylindre de frein à ressort (442) et/ou de la fourniture d'une pression de freinage en cas de défaillance de frein de service (pN) au niveau du raccord de freinage en cas de défaillance (22).

14. Unité de soupapes de sécurité en cas de défaillance (1) selon l'une des revendications 12 ou 13, **caractérisée en ce que**
- l'unité de soupapes de sécurité en cas de défaillance (1) présente une première soupape de freinage en cas de défaillance (40) conçue sous forme de soupape monostable et une seconde soupape de freinage en cas de défaillance (60) conçue sous forme de soupape monostable, dans laquelle
- la première soupape de freinage en cas de défaillance (40) et la seconde soupape de freinage en cas de défaillance (60) sont montées pneumatiquement en série dans la conduite principale de soupape (30), et
- la première soupape de freinage en cas de défaillance (40) peut être commandée par la première unité de commande (410) et la seconde soupape de freinage en cas de défaillance (60) peut être commandée par la seconde unité de commande (420).

15. Système de freinage électropneumatique (204) pour un véhicule (200), en particulier un véhicule utilitaire (202), comprenant un système de frein de service (510) et un système de frein de stationnement (520), et une unité de commande (410, 420), conçue pour la mise en œuvre d'un procédé selon les revendications 1 à 11.

16. Système de freinage électropneumatique (204) selon la revendication 15, **caractérisé par**
- une unité de soupapes de sécurité en cas de défaillance (1) conformément à l'une des revendications 12 à 14, dans lequel
- l'unité de soupapes de sécurité en cas de défaillance (1) est disposée dans une branche de commande (430) séparée.

17. Système de freinage électropneumatique (204) selon la revendication 15 ou 16, **caractérisé en ce que**
- le système de freinage (204) présente une première unité de commande (410) et une seconde unité de commande (420) qui sont alimentées en énergie indépendamment l'une de l'autre et/ou qui peuvent se substituer mutuellement au moins partiellement dans leur fonction.

18. Système de freinage électropneumatique (204) selon l'une des revendications 15 à 17, **caractérisé en ce que**
une quantité d'air de frein de service (mN) qui peut être absorbée ou ventilée par la fonction de ventilation de frein de service (FBE) est supérieure ou égale à une quantité d'air de pression de frein à ressort (mF) qui peut être absorbée par au moins un cylindre de frein à ressort (442), en particulier par tous les cylindres de frein à ressort (442) du système de frein de stationnement (520), de telle sorte que
la ventilation de la pression de ventilation d'accumulateur à ressort (pFS) par la fonction de ventilation de frein de service (FBE) entraîne une ventilation complète de l'au moins un cylindre de frein à ressort (442).

19. Système de freinage électropneumatique (204) selon l'une des revendications 15 à 18, **caractérisé en ce que**
le système de freinage électropneumatique (204), de préférence l'unité de commande (410, 420) ou un bus de véhicule (462) ou un autre moyen de commande électronique (464), est conçu, lors de la ventilation de la pression de ventilation d'accumulateur à ressort (pFS) au moyen d'une fonction de ventilation de frein de service (FBE), pour interrompre une alimentation en pression (600) alimentant le système de frein de stationnement (520), de préférence au moyen d'un arrêt d'un compresseur (602) et/ou d'une fermeture d'une conduite d'alimentation (468) et/ou d'une diminution de la pression de réserve (pV).

20. Véhicule (200), en particulier véhicule utilitaire (202), conçu pour la mise en œuvre d'un procédé selon l'une des revendications 1 à 11 et/ou comportant une unité de soupapes de sécurité en cas de défaillance (1) selon l'une des revendications 12 à 14 et/ou comportant un système de freinage électropneumatique (204) selon les revendications 15 à 19.
